# EUROPEAN PATENT SPECIFICATION

(11) **EP 4 219 065 B1**
(45) Date of publication and mention of the grant of the patent: **09.07.2025**
(21) Application number: 20960834.8
(22) Date of filing: 06.11.2020
(51) Int. Cl.: B23K 26/34, B23K 26/21, B23K 26/70, B22F 10/25, B22F 10/30, B22F 12/50, B22F 12/90, B33Y 30/00, B33Y 40/00, B33Y 50/02, B23K 26/08, B23K 26/38, B23K 37/02, B29C 64/321, B29C 64/343, B29C 64/393

(54) **ADDITIVE MANUFACTURING DEVICE, COMPOSITE PROCESSING DEVICE, CONTROL METHOD FOR ADDITIVE MANUFACTURING DEVICE, AND CONTROL PROGRAM FOR ADDITIVE MANUFACTURING DEVICE**
VORRICHTUNG ZUR GENERATIVEN FERTIGUNG, VERBUNDVERARBEITUNGSVORRICHTUNG, STEUERUNGSVERFAHREN FÜR VORRICHTUNG ZUR GENERATIVEN FERTIGUNG UND STEUERUNGSPROGRAMM FÜR VORRICHTUNG ZUR GENERATIVEN FERTIGUNG
DISPOSITIF DE FABRICATION ADDITIVE, DISPOSITIF DE TRAITEMENT COMPOSITE, PROCÉDÉ DE COMMANDE POUR DISPOSITIF DE FABRICATION ADDITIVE, ET PROGRAMME DE COMMANDE POUR DISPOSITIF DE FABRICATION ADDITIVE

(43) Date of publication of application: 02.08.2023
(73) Proprietor: Yamazaki Mazak Corporation, Niwa-gun, Aichi 480-0197 (JP)
(72) Inventor: OUCHI, Seigo, Niwa-gun, Aichi 480-0197 (JP); ASANO, Kohei, Niwa-gun, Aichi 480-0197 (JP)
(74) Representative: TBK
(86) International application number: PCT/JP2020/041584
(87) International publication number: WO 2022/097282

(56) References cited:
- EP-A1- 3 990 149
- EP-A1- 3 990 149
- WO-A1-2020/260478
- WO-A1-2021/028215
- JP-A- 2010 121 938
- JP-A- 2012 125 772
- JP-A- 2014 528 584
- JP-A- 2020 037 240
- JP-A- H1 133 759
- US-A1- 2017 028 631
- US-B1- 7 045 738

## Description

The present invention relates to an additive manufacturing apparatus according to the preamble of claim 1, a multi-tasking apparatus, a method for controlling the additive manufacturing apparatus, and a control program for the additive manufacturing apparatus.

### Background Art

US 7 045 738 B1 describes an additive manufacturing apparatus that detects the flow rate of powder using an optical sensor. To calibrate the accuracy of the optical sensor, a weigher is placed below a nozzle, and the weigher is removed after calibration work.

According to the method disclosed in US 7 045 738 B1, if an abnormality occurs in a powder feeder or the sensor after the calibration is once completed, a workpiece needs to be removed from the additive manufacturing apparatus, and the weigher needs to be placed to carry out the calibration again. This undesirably prolongs the time during which the additive manufacturing apparatus is stopped for checking the cause of the abnormality.

US 2017/0028631 A1 shows a generic additive manufacturing apparatus according to the preamble of claim 1, comprising: a powder feeder configured to feed powder using a carrier gas; a head configured to discharge the powder; a first flow passage connecting the powder feeder to the head, the first flow passage being for supplying the powder from the powder feeder to the head; a flow passage switching valve disposed in a middle of the first flow passage; a reservoir tank configured to receive the powder fed from the powder feeder; a second flow passage connecting the flow passage switching valve to the reservoir tank, the second flow passage being for feeding the powder from the powder feeder to the reservoir tank, wherein the flow passage switching valve is capable of alternatively selecting whether to supply the powder from the powder feeder to the head or to the reservoir tank.

### Summary of Invention

It is the object of the present invention to further develop an additive manufacturing apparatus according to the preamble of claim 1, to provide a multi-tasking apparatus, to provide a method for controlling the additive manufacturing apparatus, and to provide a control program for the additive manufacturing apparatus that perform real-time processing and shorten the time for checking the cause of an abnormality without removing a workpiece from the additive manufacturing apparatus.

The object of the present invention is achieved by each of the subject-matter according to the independent claims.

Further advantageous developments according to the present invention are defined in the dependent claims.

According to the present invention, an additive manufacturing apparatus includes a powder feeder, a head, a first flow passage, a flow passage switching valve, a reservoir tank, a second flow passage, a first sensor, and a second sensor. The powder feeder is configured to feed powder using a carrier gas. The powder is discharged through the head. The first flow passage connects the powder feeder to the head. The powder is supplied from the powder feeder to the head through the first flow passage. The flow passage switching valve is disposed in a middle of the first flow passage. The reservoir tank is configured to receive the powder fed from the powder feeder. The second flow passage connects the flow passage switching valve to the reservoir tank. The powder is fed from the powder feeder to the reservoir tank through the second flow passage. The flow passage switching valve is capable of alternatively selecting whether to supply the powder from the powder feeder to the head or to the reservoir tank. The first sensor is disposed in the first flow passage between the flow passage switching valve and the head and is configured to detect a first flow rate of the powder flowing to the head. The second sensor is disposed in the second flow passage and is configured to detect a second flow rate of the powder flowing to the reservoir tank.

The additive manufacturing apparatus further includes a memory and a processor. The memory is configured to store a first mathematical model and a second mathematical model. The first mathematical model describes a relationship between an output of the first sensor and the first flow rate of the powder. The second mathematical model describes a relationship between an output of the second sensor and the second flow rate of the powder. The processor is configured to calculate the first flow rate from the output of the first sensor based on the first mathematical model and the second flow rate from the output of the second sensor based on the second mathematical model. The processor is configured to determine whether there is an abnormality in the additive manufacturing apparatus by comparing the output of the first sensor when the powder is fed from the powder feeder, which is operated under a predetermined operating condition, to the first flow passage with the output of the second sensor when the powder is fed from the powder feeder, which is operated under the predetermined operating condition, to the second flow passage.

Preferably, the additive manufacturing apparatus further includes a measurement instrument capable of measuring the amount of powder accumulated in the reservoir tank. In the additive manufacturing apparatus, the second mathematical model is generated based on a correspondence relationship between a change in the amount in the reservoir tank per unit time and the output of the second sensor corresponding to the change in the reservoir tank.

Preferably, in the additive manufacturing apparatus, the amount of powder discharged from the head to a container, which is located opposite to an outlet of the head to receive the powder, is measured, and the first mathematical model is generated based on a correspondence relationship between a change in the amount in the container per unit time and the output of the first sensor corresponding to the change in the container.

Preferably, in the additive manufacturing apparatus, the processor is configured to execute an updating process of acquiring the output of the second sensor that has detected the powder flowing through the second flow passage after the flow passage switching valve has switched the flow passage through which the powder is to be fed from the powder feeder to the second flow passage, and updating the first mathematical model using the output, the first mathematical model, and the second mathematical model. Alternatively, the processor may be configured to execute a determining process. The determining process includes determining whether there is an abnormality in the additive manufacturing apparatus by acquiring the output of the second sensor that has detected the powder flowing through the second flow passage after the flow passage switching valve has switched the flow passage through which the powder is to be fed from the powder feeder to the second flow passage, calculating a predicted output of the first sensor when the powder feeder feeds the powder to the first flow passage under the same operating condition as when the powder feeder feeds the powder to the second flow passage using the output, the first mathematical model, and the second mathematical model, and comparing, with the predicted output, the output of the first sensor that has detected the powder flowing through the first flow passage after the flow passage switching valve has switched the flow passage through which the powder is to be fed from the powder feeder to the first flow passage.

Preferably, the processor is configured to repeat the updating process at a predetermined cycle. The processor may be configured to repeat the determining process at a predetermined cycle.

Preferably, in the additive manufacturing apparatus, when the output of the first sensor deviates from a normal fluctuation range while the powder is supplied to the head from the powder feeder, which is operated under a certain operating condition, the processor is configured to switch the flow passage through which the powder is to be fed from the powder feeder to the second flow passage using the flow passage switching valve, and acquire the output of the second sensor that has detected the powder flowing to the reservoir tank from the powder feeder, which is operated under the certain operating condition. In the additive manufacturing apparatus, the processor is configured to determine whether an abnormality is in the powder feeder or in at least one of units including the first flow passage and the first sensor based on the output of the first sensor and the output of the second sensor.

Preferably, when an absolute value of a difference between the first flow rate calculated from the output of the first sensor and the second flow rate calculated from the output of the second sensor is greater than a predetermined threshold value, the processor is configured to determine that an abnormality has occurred in at least one of the units including the first sensor and the first flow passage.

Preferably, in the additive manufacturing apparatus, when the absolute value of the difference between the first flow rate calculated from the output of the first sensor and the second flow rate calculated from the output of the second sensor is less than or equal to the predetermined threshold value, the processor is configured to determine that an abnormality has occurred in the powder feeder.

Preferably, the additive manufacturing apparatus further includes a notification device configured to provide information to a user. In the additive manufacturing apparatus, in response to determining the abnormality, the processor is configured to control the notification device to raise an alarm or to bring the additive manufacturing apparatus to an emergency stop.

Preferably, in the additive manufacturing, the first sensor and the second sensor are optical sensors, and the first flow passage includes a first transmissive window that allows light of the first sensor to pass through, and the second flow passage includes a second transmissive window that allows light of the second sensor to pass through.

A multi-tasking apparatus of the present disclosure includes the additive manufacturing apparatus according to the present invention and a cutting device configured to perform a cutting process.

A method for controlling an additive manufacturing apparatus according to the present invention includes supplying powder from a powder feeder set to a predetermined operating condition to a first flow passage, which connects the powder feeder to a head, to discharge the powder from the head. The controlling method includes detecting the powder flowing through the first flow passage using a first sensor. The controlling method includes calculating a first flow rate of the powder flowing to the head based on an output of the first sensor. The controlling method includes switching a flow passage through which the powder is to be fed from the powder feeder from the first flow passage to a second flow passage, which connects the powder feeder to a reservoir tank. The controlling method includes feeding the powder from the powder feeder set to the predetermined operating condition to the reservoir tank through the second flow passage. The controlling method includes detecting the powder flowing through the second flow passage using a second sensor. The controlling method includes calculating a second flow rate of the powder flowing to the reservoir tank based on the output of the second sensor; storing a first mathematical model, which describes a relationship between the output of the first sensor and the first flow rate of the powder, and a second mathematical model, which describes a relationship between the output of the second sensor and the second flow rate of the powder, using a memory; and calculating the first flow rate from the output of the first sensor based on the first mathematical model and the second flow rate from the output of the second sensor based on the second mathematical model. The controlling method further includes determining whether there is an abnormality in the additive manufacturing apparatus by comparing the output of the first sensor when the powder is fed from the powder feeder, which is operated under a predetermined operating condition, to the first flow passage with the output of the second sensor when the powder is fed from the powder feeder, which is operated under the predetermined operating condition, to the second flow passage.

A program for controlling an additive manufacturing apparatus according to the present invention causes a processor to execute the method according to the present invention.

Preferably, the controlling method includes measuring the amount of powder accumulated in the reservoir tank and generating the second mathematical model based on a correspondence relationship between a change in the amount in the reservoir tank per unit time and the output of the second sensor corresponding to the change in the reservoir tank.

Preferably, the controlling method includes measuring the amount of powder discharged from the head to a container, which is located opposite to an outlet of the head to receive the powder, and generating the first mathematical model based on a correspondence relationship between a change in the amount in the container per unit time and the output of the first sensor corresponding to the change in the container.

Preferably, the controlling method includes executing an updating process of acquiring the output of the second sensor that has detected the powder flowing through the second flow passage after the flow passage switching valve has switched the flow passage through which the powder is to be fed from the powder feeder to the second flow passage, and updating the first mathematical model using the output, the first mathematical model, and the second mathematical model. Alternatively, the controlling method may include a determining process. The determining process includes determining whether there is an abnormality in the additive manufacturing apparatus by acquiring the output of the second sensor that has detected the powder flowing through the second flow passage after the flow passage switching valve has switched the flow passage through which the powder is to be fed from the powder feeder to the second flow passage, calculating a predicted output of the first sensor when the powder feeder feeds the powder to the first flow passage under the same operating condition as when the powder feeder feeds the powder to the second flow passage using the output, the first mathematical model, and the second mathematical model, and comparing, with the predicted output, the output of the first sensor that has detected the powder flowing through the first flow passage after the flow passage switching valve has switched the flow passage through which the powder is to be fed from the powder feeder to the first flow passage.

Preferably, the controlling method the updating process at a predetermined cycle. The controlling method may repeat the determining process at a predetermined cycle.

Preferably, the controlling method include, when the output of the first sensor deviates from a normal fluctuation range while the powder is supplied to the head from the powder feeder, which is operated under a certain operating condition, switching the flow passage through which the powder is to be fed from the powder feeder to the second flow passage using the flow passage switching valve, and acquiring the output of the second sensor that has detected the powder flowing to the reservoir tank from the powder feeder, which is operated under the certain operating condition. The controlling method includes determining whether an abnormality is in the powder feeder or in at least one of units including the first flow passage and the first sensor based on the output of the first sensor and the output of the second sensor.

Preferably, the controlling method includes, when an absolute value of a difference between the first flow rate calculated from the output of the first sensor and the second flow rate calculated from the output of the second sensor is greater than a predetermined threshold value, determining that an abnormality has occurred in at least one of the units including the first sensor and the first flow passage.

Preferably, the controlling method includes, when an absolute value of a difference between the first flow rate calculated from the output of the first sensor and the second flow rate calculated from the output of the second sensor is less than or equal to a predetermined threshold value, determining that an abnormality has occurred in the powder feeder.

Preferably, the controlling method includes, in response to determining an abnormality, controlling a notification device configured to provide information to a user to raise an alarm or bringing the additive manufacturing apparatus to an emergency stop.

Preferably, the control program causes the processor to execute a process of calculating the first flow rate from the output of the first sensor based on a first mathematical model, which describes a relationship between the output of the first sensor and the first flow rate of the powder, and calculating the second flow rate from the output of the second sensor based on a second mathematical model, which describes a relationship between the output of the second sensor and the second flow rate of the powder.

Preferably, the control program causes the processor to execute a process of generating the second mathematical model based on a correspondence relationship between a change in the amount of powder accumulated in the reservoir tank per unit time and the output of the second sensor corresponding to the change in the reservoir tank.

Preferably, the control program causes the processor to execute a process of acquiring a measured value of the amount of powder discharged from the head to a container, which is located opposite to an outlet of the head to receive the powder, and generating the first mathematical model based on a correspondence relationship between a change in the amount in the container per unit time and the output of the first sensor corresponding to the change in the container.

Preferably, the control program causes the processor to execute a process of determining whether there is an abnormality in the additive manufacturing apparatus by comparing the output of the first sensor when the powder is fed from the powder feeder, which is operated under a predetermined operating condition, to the first flow passage with the output of the second sensor when the powder is fed from the powder feeder, which is operated under the predetermined operating condition, to the second flow passage.

Preferably, the control program causes the processor to execute an updating process of acquiring the output of the second sensor that has detected the powder flowing through the second flow passage after the flow passage switching valve has switched the flow passage through which the powder is to be fed from the powder feeder to the second flow passage, and updating the first mathematical model using the output, the first mathematical model, and the second mathematical model. Alternatively, the control program may cause the processor to execute a determining process. The determining process includes determining whether there is an abnormality in the additive manufacturing apparatus by acquiring the output of the second sensor that has detected the powder flowing through the second flow passage after the flow passage switching valve has switched the flow passage through which the powder is to be fed from the powder feeder to the second flow passage, calculating a predicted output of the first sensor when the powder feeder feeds the powder to the first flow passage under the same operating condition as when the powder feeder feeds the powder to the second flow passage using the output, the first mathematical model, and the second mathematical model, and comparing, with the predicted output, the output of the first sensor that has detected the powder flowing through the first flow passage after the flow passage switching valve has switched the flow passage through which the powder is to be fed from the powder feeder to the first flow passage.

Preferably, the control program causes the processor to execute a process of repeating the updating process at a predetermined cycle. The control program may cause the processor to execute a process of repeating the determining process at a predetermined cycle.

Preferably, the control program according causes the processor to execute, when the output of the first sensor deviates from a normal fluctuation range while the powder is supplied to the head from the powder feeder, which is operated under a certain operating condition, a process of switching the flow passage through which the powder is to be fed from the powder feeder to the second flow passage using the flow passage switching valve, and acquiring the output of the second sensor that has detected the powder flowing to the reservoir tank from the powder feeder, which is operated under the certain operating condition. The control program causes the processor to execute a process of determining whether an abnormality is in the powder feeder or in at least one of units including the first flow passage and the first sensor based on the output of the first sensor and the output of the second sensor.

Preferably, the control program causes the processor to execute, when an absolute value of a difference between the first flow rate calculated from the output of the first sensor and the second flow rate calculated from the output of the second sensor is greater than a predetermined threshold value, a process of determining that an abnormality has occurred in at least one of the units including the first sensor and the first flow passage.

Preferably, the control program causes the processor to execute, when the absolute value of the difference between the first flow rate calculated from the output of the first sensor and the second flow rate calculated from the output of the second sensor is less than or equal to the predetermined threshold value, a process of determining that an abnormality has occurred in the powder feeder.

Preferably, the control program causes the processor to execute, in response to determining the abnormality, a process of controlling a notification device configured to provide information to a user to raise an alarm or bringing the additive manufacturing apparatus to an emergency stop.

According to the present invention, the additive manufacturing apparatus, the multi-tasking apparatus, the controlling method, and the control program (i.e. the subject-matter according to the present invention) switch from the first flow passage, which connects the powder feeder to the head, to the second flow passage, which connects the powder feeder to the reservoir tank, and calculate the first flow rate of the powder flowing to the head and the second flow rate of the powder flowing to the reservoir tank. Thus, even if an abnormality occurs in the additive manufacturing apparatus, the cause of the abnormality can be investigated without removing a workpiece from the additive manufacturing apparatus. Additionally, in the additive manufacturing apparatus, the powder feeder can be checked for proper operation or the sensor can be calibrated while a workpiece is not machined such as during transferring.

The subject-matter according to the present invention further calculates the flow rate of the powder from the sensor output using the mathematical models and thus has fast arithmetic processing speed, which is suitable for real-time processing. Additionally, this requires less amount of memory than approximation calculation that uses a table.

Preferably, some of the preferred embodiments of the subject-matter according to the present invention can calibrate the second mathematical model.

Preferably, some of the preferred embodiments of the subject-matter according to the present invention can calibrate the first mathematical model.

Preferably, some of the preferred embodiments of the subject-matter according to the present invention can automatically determine whether there is an abnormality in the additive manufacturing apparatus based on the output of the first sensor and the output of the second sensor.

Preferably, some of the preferred embodiments of the subject-matter according to the present invention can update the first mathematical model through an updating process without removing the workpiece from the additive manufacturing apparatus. Additionally, the determining process can determine whether there is an abnormality in the additive manufacturing apparatus without removing a workpiece from the additive manufacturing apparatus.

Preferably, some of the preferred embodiments of the subject-matter according to the present invention can check for proper operation of the additive manufacturing apparatus or can calibrate the sensor while a workpiece is not machined such as during transferring that takes place at certain intervals in the additive manufacturing apparatus.

Preferably, some of the preferred embodiments of the subject-matter according to the present invention can determine an abnormality in the powder feeder or an abnormality in at least one of the units including the first sensor and the first flow passage.

Preferably, some of the preferred embodiments of the subject-matter according to the present invention can determine an abnormality in at least one of the units including the first sensor and the first flow passage without removing the workpiece from the additive manufacturing apparatus.

Preferably, some of the preferred embodiments of the subject-matter according to the present invention can determine an abnormality in the powder feeder without removing the workpiece from the additive manufacturing apparatus.

Preferably, some of the preferred embodiments of the subject-matter according to the present invention can notify a user of an abnormality or suspend manufacturing with the additive manufacturing apparatus.

Preferably, the first sensor and the second sensor are optical sensors that do not directly come into contact with the powder and are thus unlikely to cause a failure.

With the technique disclosed, even if an abnormality occurs in the additive manufacturing apparatus, the cause of the abnormality can be investigated without removing a workpiece from the additive manufacturing apparatus. Additionally, in the additive manufacturing apparatus, the powder feeder can be checked for proper operation or the sensor can be calibrated while a workpiece is not machined such as during transferring.

### Brief Description of Drawings

[FIG. 1] FIG. 1 is a view of a multi-tasking apparatus according to an embodiment illustrating an exterior configuration.
[FIG. 2] FIG. 2 is a schematic view of the multi-tasking apparatus illustrating the configuration inside a cover.
[FIG. 3] FIG. 3 is another schematic view of the multi-tasking apparatus illustrating the configuration inside the cover.
[FIG. 4] FIG. 4 is a schematic view of an additive manufacturing apparatus.
[FIG. 5] FIG. 5 is an enlarged view of an optical sensor and the surrounding structure illustrating the principle of flow rate measurement performed by the optical sensor.
[FIG. 6] FIG. 6 is an enlarged view of the optical sensor and the surrounding structure illustrating the principle of the flow rate measurement performed by the optical sensor.
[FIG. 7] FIG. 7 is a block diagram illustrating the internal configuration of a controller.
[FIG. 8] FIG. 8 is a flowchart illustrating the flow of a periodic calibration process.
[FIG. 9] FIG. 9 is a flowchart illustrating an example flow of an abnormality determining process.
[FIG. 10] FIG. 10 is a flowchart illustrating another example flow of the abnormality determining process.
[FIG. 11] FIG. 11 is a flowchart illustrating an example flow of a process of determining an abnormality location.

### Description of Embodiments

The present invention will now be described in detail with reference to the drawings illustrating embodiments of the present invention. Like reference numerals designate corresponding or approximately identical elements throughout the drawings.

### <Embodiment>

### <Structure of Multi-Tasking Apparatus 100>

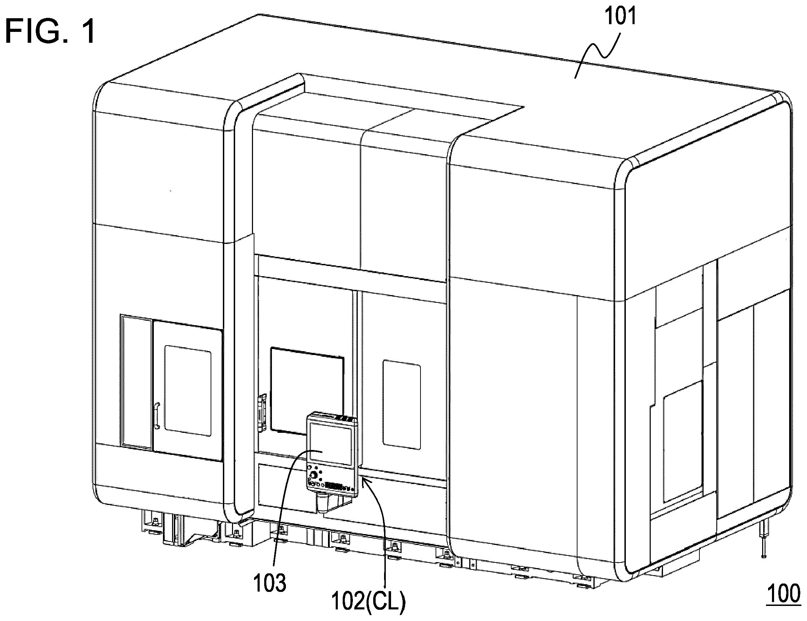

FIG. 1 is a view of a multi-tasking apparatus 100 according to an embodiment of the present invention illustrating an exterior configuration. Among multi-tasking apparatuses that are capable of performing multiple machining processes on a workpiece, the multi-tasking apparatus 100 of the present embodiment is the one that can perform additive manufacturing in combination with cutting. The multi-tasking apparatus 100 includes a cover 101 and an operation panel 102. The cover 101 covers pieces of equipment that perform additive manufacturing and cutting. The operation panel 102 includes a notification device 103 for providing information to a user. Specifically, the notification device 103 includes a display that displays information to the user as an image or a speaker that provides information to a user by sound. Besides the above, the operation panel 102 also includes an input device that receives the input from a controller CL for controlling the multi-tasking apparatus 110 or the user. The detailed structure of the controller CL will be described below.

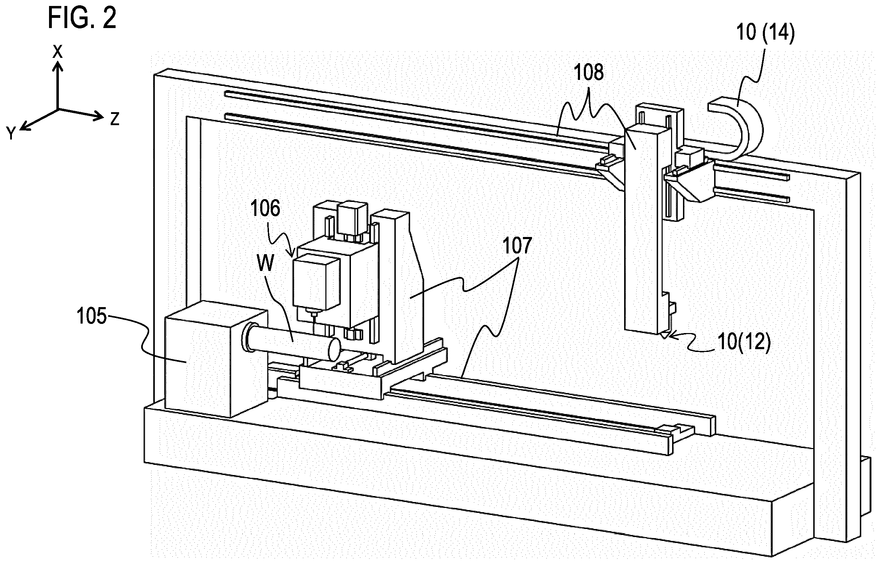

FIG. 2 is a schematic view of the multi-tasking apparatus 100 illustrating the configuration inside the cover 101. Referring to FIG. 2, the multi-tasking apparatus 100 includes a holding mechanism 105, a cutting device 106, an additive manufacturing apparatus 10, a first movement mechanism 107, and a second movement mechanism 108. The holding mechanism 105 is configured to hold a workpiece W. The cutting device 106 is configured to cut the workpiece W. The additive manufacturing apparatus 10 is configured to perform additive manufacturing on the workpiece W. The first movement mechanism 107 is configured to move the cutting device 106 relative to the workpiece W. The second movement mechanism 108 is configured to move the additive manufacturing apparatus 10 relative to the workpiece W.

FIG. 2 illustrates the position of the cutting device 106 and the additive manufacturing apparatus 10 when the workpiece W is machined using the cutting device 106. The holding mechanism 105 is configured to rotate the workpiece W with respect to a rotation axis parallel to a Z axis in the drawing. The cutting performed by the cutting device 106 includes turning and milling. In turning, a turning tool mounted on a processing head is brought into contact with the workpiece W, which is rotated by the holding mechanism 105, to machine the workpiece W. In milling, a milling tool mounted on the processing head is brought into contact with the workpiece W, which is held still by the holding mechanism 105, with the milling tool being rotated to machine the workpiece W. However, the cutting device 106 may perform cutting processes other than the above-mentioned cutting processes. Furthermore, the multi-tasking apparatus 100 may include a special machining device such as a laser cutter or other machining devices such as a polisher.

The first movement mechanism 107 can move the cutting device 106 in an X-axis direction and a Y-axis direction in addition to a Z-axis direction in FIG. 2. The X-axis direction is approximately perpendicular to the Z-axis direction and is the vertical direction. The Y-axis direction is approximately perpendicular to the X-axis direction and the Z-axis direction and is the horizontal direction. Furthermore, the first movement mechanism 107 is capable of turning the cutting device 106 around a rotation axis horizontal to the Y axis.

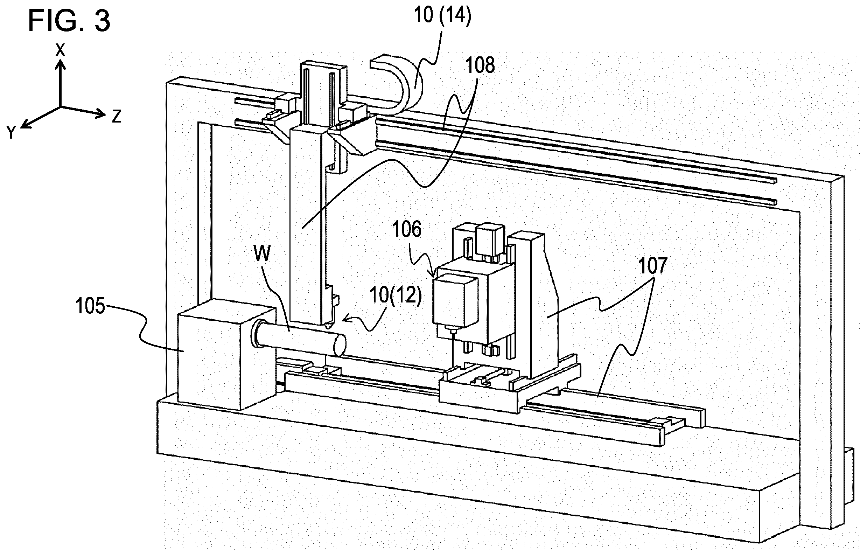

FIG. 3 illustrates the position of the cutting device 106 and the additive manufacturing apparatus 10 when the workpiece W is machined using the additive manufacturing apparatus 10. The additive manufacturing performed by the additive manufacturing apparatus 10 refers to a technique that, while supplying an additive material to the workpiece W, controls the position where heat is generated by focusing an energy ray such as a laser beam and selectively melts and joins the additive material to the workpiece W. In the present embodiment, the additive material refers to metal powder or ceramic powder. It is to be noted that in the following description, the additive material is described as the powder. Referring to FIGs. 2 and 3, the additive manufacturing apparatus 10 includes a head 12 and a transporting mechanism 14. The head 12 is configured to output the powder and a laser beam. The transporting mechanism 14 is configured to transport the powder, the energy ray, and a carrier gas used for the additive manufacturing to the head 12. It is to be noted that the additive manufacturing apparatus 10 includes other structures, which will be discussed below.

The second movement mechanism 108 can move the additive manufacturing apparatus 10 in the X-axis direction and the Y-axis direction in addition to the Z-axis direction in FIG. 2. Furthermore, the second movement mechanism 108 is capable of turning the additive manufacturing apparatus 10 around a rotation axis horizontal to the Y axis. In replacing the additive manufacturing apparatus 10 with the cutting device 106, the second movement mechanism 108 lifts the additive manufacturing apparatus 10 above the cutting device 106 (in the X-axis positive direction). This allows the locations of the additive manufacturing apparatus 10 and the cutting device 106 to be changed without interfering with each other.

### <Configuration of Additive Manufacturing Apparatus 10>

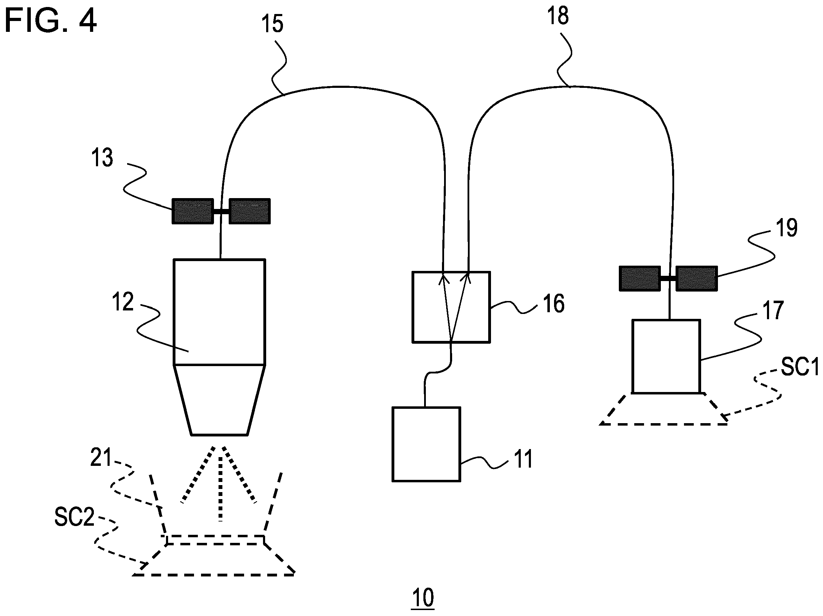

FIG. 4 is a schematic view of the additive manufacturing apparatus 10. As illustrated in FIG. 4, the additive manufacturing apparatus 10 includes a powder feeder 11, the head 12, a first sensor 13, a first flow passage 15, a flow passage switching valve 16, a reservoir tank 17, a second flow passage 18, and a second sensor 19. The powder feeder 11 is configured to feed the powder using the carrier gas. Specifically, the powder feeder 11 includes a rotatable measurement disk that receives the powder dropped from a powder container and feeds the powder by supplying the carrier gas to the rotatable measurement disk at a predetermined flow rate. The flow rate of the carrier gas is the volume of the gas supplied per unit time. The unit of the flow rate of the carrier gas is, for example, L/min. The power feeder 11 is capable of controlling the flow rate of the powder to be fed by the rotational speed of the rotatable measurement disk. In the present embodiment, the flow rate of the powder is the weight of the powder that flowed through each of the first flow passage 15 and the second flow passage 18 per unit time. The unit of the weight of the powder is, for example, g/min or mg/min. It is to be noted that since the detailed structure of the powder feeder 11 is well known, the detailed description will be omitted.

The additive manufacturing apparatus 10 discharges the powder through the head 12 as described above. The first flow passage 15 is part of the transporting mechanism 14 described above and connects the powder feeder 11 to the head 12. The powder is supplied from the powder feeder 11 to the head 12 through the first flow passage 15. The flow passage switching valve 16 is located in the middle of the first flow passage 15. The reservoir tank 17 is configured to receive the powder fed from the powder feeder 11. The additive manufacturing apparatus 10 may further include a measurement instrument SC1 that is capable of measuring the amount of powder that accumulates in the reservoir tank 17. For example, the measurement instrument SC1 is a weight scale that measures the weight of the powder that accumulates in the reservoir tank 17.

The second flow passage 18 connects the flow passage switching valve 16 to the reservoir tank 17. The powder flows from the powder feeder 11 to the reservoir tank 17 through the second flow passage 18. The flow passage switching valve 16 is capable of alternatively selecting whether to supply the powder from the powder feeder 11 to the head 12 or to the reservoir tank 17. It is to be noted that FIG. 4 illustrates the flow passage switching valve 16 on the outside of the powder feeder 11, but the flow passage switching valve 16 may be located inside the powder feeder 11. For example, the powder feeder 11 may include a first port connected to the first flow passage 15 and a second port connected to the second flow passage 18. The flow passage switching valve 16 may be located between an internal space of the powder feeder 11 where the above-described rotatable measurement disk is stored and the first and second ports. In this case, the passage from the internal space of the powder feeder 11 to the first port is also understood as part of the first flow passage 15.

The first sensor 13 is located in the first flow passage 15 between the flow passage switching valve 16 and the head 12. The first sensor 13 is configured to detect a first flow rate of the powder flowing to the head 12. The second sensor 19 is located in the second flow passage 18 and is configured to detect a second flow rate of the powder flowing to the reservoir tank 17. The first sensor 13 and the second sensor 19 are preferably optical sensors. It is to be noted, however, that the first sensor 13 and the second sensor 19 may be other kinds of sensors that can measure the flow rate of the powder. For example, the first sensor 13 and the second sensor 19 may be an ultrasonic flow meter, an impeller flow meter, or other flow meters. When the first sensor 13 and the second sensor 19 are optical sensors, transmissive windows are preferably provided at a position in the first flow passage 15 where the first sensor 13 is located and a position in the second flow passage 18 where the second sensor 19 is located. The light from the optical sensors passes through the transmissive windows. It is to be noted that the first flow passage 15 and the second flow passage 18 may be pipes made of material that allows the light to pass through. In this case, the section of the pipe corresponding to the position in the first flow passage 15 where the first sensor 13 is located and the section of the pipe corresponding to the position in the second flow passage 18 where the second sensor 19 is located are equivalent to the transmissive windows described above.

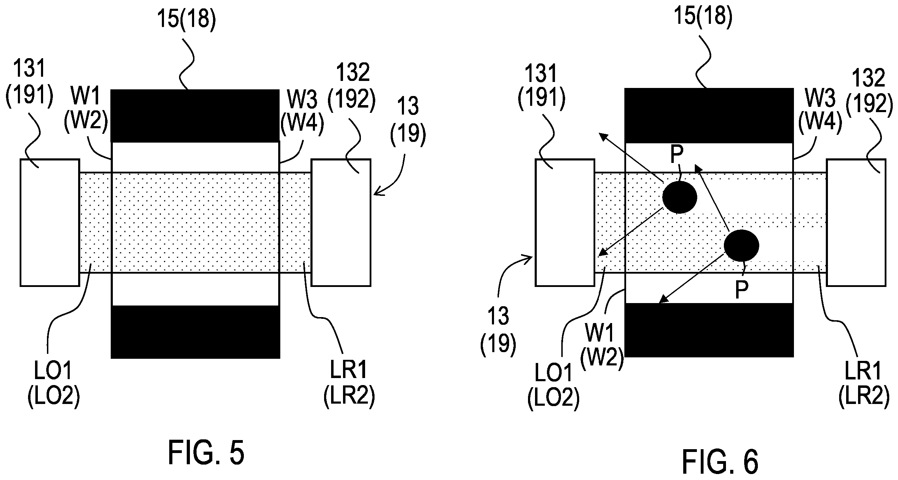

FIGs. 5 and 6 are enlarged views of the optical sensor and the surrounding structure. As illustrated in FIGs. 5 and 6, the first sensor 13 includes a light emitter 131 and a light receiver 132. The second sensor 19 includes a light emitter 191 and a light receiver 192. The light emitters 131 and 191 are configured to emit measurement light beams LO1 and LO2, respectively. The first flow passage 15 includes a first transmissive window W1 that allows the light of the first sensor 13 to pass through. The second flow passage 18 includes a second transmissive window W2 that allows the light of the second sensor 19 to pass through. Furthermore, the first flow passage 15 includes a third transmissive window W3 that allows the light inside the first flow passage 15 to be transmitted to the outside of the first flow passage 15. The second flow passage 18 includes a fourth transmissive window W4 that allows the light inside the second flow passage 18 to be transmitted to the outside of the second flow passage 18.

As illustrated in FIGs. 5 and 6, the first transmissive window W1 is configured to allow the measurement light beam LO1 to be transmitted to the inside of the first flow passage 15. The second transmissive window W2 is configured to allow the measurement light beam LO2 to be transmitted to the inside of the second flow passage 18. The light beam LO1 and the light beam LO2 preferably have a wavelength that is not easily absorbed by the particles of the powder flowing through the first flow passage 15 and the second flow passage 18. The first transmissive window W1 and the second transmissive window W2 may be anything as long as the light beam LO1 and the light beam LO2 are allowed to pass through. It is to be noted, however, that the first transmissive window W1 preferably has a high transmittance for the light beam LO1. The second transmissive window W2 preferably has a high transmittance for the light beam LO2. The light beam LO1 and the light beam LO2 are preferably light beams that have approximately the same properties and approximately the same intensity. The light beams having approximately the same properties means that the peak wavelength and the wavelength band are approximately the same. The approximately the same intensity means that the intensity at each wavelength in the wavelength band is approximately the same. For example, when the first sensor 13 and the second sensor 19 are the same products and are operating properly, the light beam LO1 and the light beam LO2 are regarded as the light beams having approximately the same properties and approximately the same intensity. When the difference in the peak wavelength or the wavelength band between the light beam LO1 and the light beam LO2 is within the range of variation of the same products, the peak wavelengths or the wavelength bands are regarded as approximately the same. Similarly, when the difference in the intensity at each wavelength in the wavelength band between the light beam LO1 and the light beam LO2 is within the range of variation of the same products, the intensities at each wavelength in the wavelength band are regarded as approximately the same.

The third transmissive window W3 is configured to allow a light beam LR1 inside the first flow passage 15 to be transmitted to the outside of the first flow passage 15. The fourth transmissive window W4 is configured to allow a light beam LR2 inside the second flow passage 18 to be transmitted to the outside of the second flow passage 18. The third transmissive window W3 and the fourth transmissive window W4 may be anything as long as the light beam LR1 and the light beam LR2 are allowed to pass through. It is to be noted, however, that the third transmissive window W3 preferably has a high transmittance for the light beam LR1. The fourth transmissive window W4 preferably has a high transmittance for the light beam LR2. The first transmissive window W1 is preferably made of approximately the same material as the third transmissive window W3. The first transmissive window W1 preferably has approximately the same thickness as the third transmissive window W3. The second transmissive window W2 is preferably made of approximately the same material as the fourth transmissive window W4. The second transmissive window W2 preferably has approximately the same thickness as the fourth transmissive window W4. Furthermore, the first transmissive window W1, the second transmissive window W2, the third transmissive window W3, and the fourth transmissive window W4 are preferably made of the same material and have a high transmittance for the light beam LO1, the light beam LO2, the light beam LR1, and the light beam LR2. For example, the first transmissive window W1, the second transmissive window W2, the third transmissive window W3, and the fourth transmissive window W4 are preferably made of material that has a transmittance of 90% or more for the light beam having the wavelength corresponding to the light beam LO1, the light beam LO2, the light beam LR1, and the light beam LR2. Furthermore, the first transmissive window W1, the second transmissive window W2, the third transmissive window W3, and the fourth transmissive window W4 preferably have approximately the same thickness and are preferably thin. Thus, the first flow passage 15 and the second flow passage 18 may be formed of light transmissive pipes of the same product. In this case, the section of the light transmissive pipe corresponding to the position in the first flow passage 15 where the first sensor 13 is located and the section of the light transmissive pipe corresponding to the position in the second flow passage 18 where the second sensor 19 is located are equivalent to the first transmissive window W1, the second transmissive window W2, the third transmissive window W3, and the fourth transmissive window W4.

Next, the measurement principle of the optical sensors will be described. As illustrated in FIG. 5, when the powder is not flowing through the first flow passage 15, the light beam LO1 reaches the light receiver 132 with hardly any attenuation. Similarly, when the powder is not flowing through the second flow passage 18, the light beam LO2 reaches the light receiver 192 with hardly any attenuation. That is, the difference between the intensity of the light beam LO1 and the intensity of the light beam LR1 is small. The difference between the intensity of the light beam LO2 and the intensity of the light beam LR2 is small. As illustrated in FIG. 6, however, when powder P is flowing, the light hits the powder P and is scattered, which decreases the intensity of the light. That is, the difference between the intensity of the light beam LO1 and the intensity of the light beam LR1 is increased, and the difference between the intensity of the light beam LO2 and the intensity of the light beam LR2 is increased. Since the powder P does not necessarily flow uniformly, the signals of the light receiver 132 and the light receiver 192 are time-varying. However, when the signals from the light receiver 132 and the light receiver 192 are filtered through, for example, a movement-average filter, the processed signals generally change linearly with respect to the flow rate of the powder flowing through the first flow passage 15 and the flow rate of the powder flowing through the second flow passage 18.

Thus, the relationship between the output of the first sensor 13 and the first flow rate of the powder flowing through the first flow passage 15 can be described using a mathematical model. In the following description, the mathematical model is referred to as a first mathematical model MD1. Similarly, the relationship between the output of the second sensor 19 and the second flow rate of the powder flowing through the second flow passage 18 can be described using a mathematical model. In the following description, the mathematical model is referred to as a second mathematical model MD2. More strictly, the first mathematical model MD1 is the model that describes the relationship between the value obtained by filtering the output of the first sensor 13 and the first flow rate of the powder flowing through the first flow passage 15. The second mathematical model MD2 is the model that describes a relationship between the value obtained by filtering the output of the second sensor 19 and the second flow rate of the powder flowing through the second flow passage 18.

### <Internal Configuration of Controller CL>

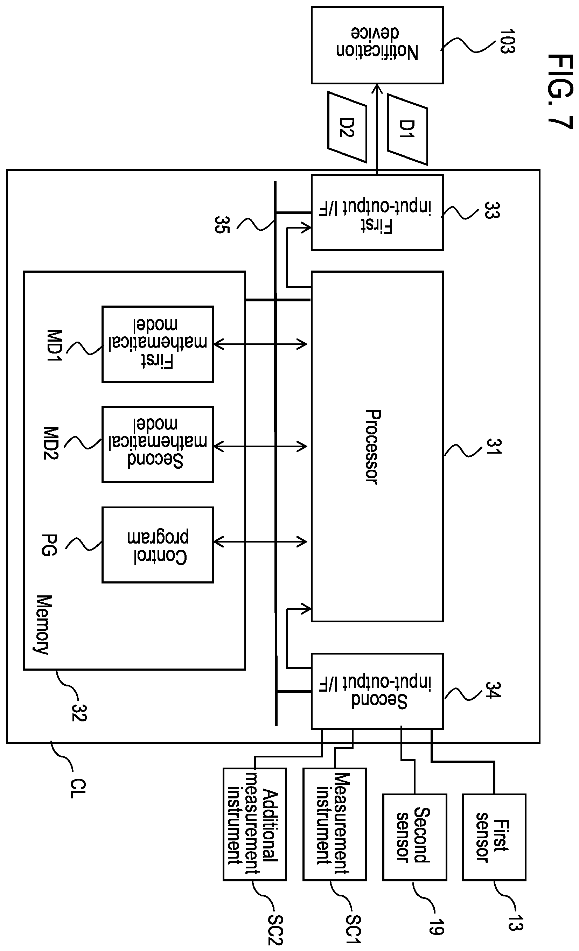

FIG. 7 is a block diagram illustrating the internal configuration of the controller CL. Referring to FIG. 7, the controller CL includes a processor 31 and a memory 32. That is, the additive manufacturing apparatus 10 further includes the processor 31 and the memory 32. The memory 32 is configured to store the first mathematical model MD1, which describes the relationship between the output of the first sensor 13 and the first flow rate of the powder, and the second mathematical model MD2, which describes the relationship between the output of the second sensor 19 and the second flow rate of the powder. Furthermore, the memory 32 is configured to store a control program PG for controlling the additive manufacturing apparatus 10. The processor 31 executes the control program PG to, for example, set the operating condition of the powder feeder 11 and switch the flow passage through which the powder flows using the flow passage switching valve 16.

Specifically, the processor 31 is configured to execute the control program PG to calculate the first flow rate from the output of the first sensor 13 based on the first mathematical model MD1 and calculate the second flow rate from the output of the second sensor 19 based on the second mathematical model MD2. That is, the method for controlling the additive manufacturing apparatus 10 includes calculating the first flow rate from the output of the first sensor 13 based on the first mathematical model MD1, which describes the relationship between the output of the first sensor 13 and the first flow rate of the powder, and calculating the second flow rate from the output of the second sensor 19 based on the second mathematical model MD2, which describes the relationship between the output of the second sensor 19 and the second flow rate of the powder. The control program PG causes the processor 31 to execute processes of calculating the first flow rate from the output of the first sensor 13 based on the first mathematical model MD1, which describes the relationship between the output of the first sensor 13 and the first flow rate of the powder, and calculating the second flow rate from the output of the second sensor 19 based on the second mathematical model MD2, which describes the relationship between the output of the second sensor 19 and the second flow rate of the powder.

Furthermore, the processor 31 is configured to determine whether there is an abnormality in the additive manufacturing apparatus 10 by comparing the output of the first sensor 13 when the powder is supplied from the powder feeder 11, which is operated under a predetermined operating condition, to the first flow passage 15 with the output of the second sensor 19 when the powder is supplied from the powder feeder 11, which is operated under the predetermined operating condition, to the second flow passage 18 through the execution of the control program PG. That is, the method for controlling the additive manufacturing apparatus 10 includes determining whether there is an abnormality in the additive manufacturing apparatus 10 by comparing the output of the first sensor 13 when the powder is supplied from the powder feeder 11, which is operated under the predetermined operating condition, to the first flow passage 15 with the output of the second sensor 19 when the powder is supplied from the powder feeder 11, which is operated under the predetermined operating condition, to the second flow passage 18. The control program PG causes the processor 31 to execute a process of determining whether there is an abnormality in the additive manufacturing apparatus 10 by comparing the output of the first sensor 13 when the powder is supplied from the powder feeder 11, which is operated under the predetermined operating condition, to the first flow passage 15 with the output of the second sensor 19 when the powder is supplied from the powder feeder 11, which is operated under the predetermined operating condition, to the second flow passage 18.

The controller CL further includes, for example, a first input/output interface 33, a second input/output interface 34, a bus 35, and a non-illustrated power supply. The first input/output interface 33 is connected to the notification device 103. The first input/output interface 33 is, for example, a video output interface or a sound output interface. The second input/output interface 34 is connected to the first sensor 13, the second sensor 19, the measurement instrument SC1, and an additional measurement instrument SC2, which will be discussed below, and receives output signals from these devices. The second input/output interface 34 is, for example, a serial interface such as USB or a parallel interface such as RS-232C or SCSI. The bus 35 connects the processor 31, the memory 32, the first input/output interface 33, and the second input/output interface 34 with each other. The bus 35 transmits output signals from the first sensor 13, the second sensor 19, the measurement instrument SC1, and the additional measurement instrument SC2 to the processor 31, transmits signals between the processor 31 and the memory 32, and transmits signals output from the processor 31 to the first input/output interface 33. The signals output from the processor 31 indicate, for example, the first flow rate, the second flow rate, and an abnormality in the additive manufacturing apparatus 10. In FIG. 7, the signals indicating, for example, the first flow rate and the second flow rate are denoted as D1, and the signal indicating an abnormality in the additive manufacturing apparatus 10 is denoted as D2.

Next, the first mathematical model MD1 and the second mathematical model MD2 will be described. As described above, experience shows that when the signals from the light receiver 132 and the light receiver 192 are filtered through, for example, a movement-average filter, the processed signals generally change linearly with respect to the flow rate of the powder flowing through the first flow passage 15 and the flow rate of the powder flowing through the second flow passage 18. Thus, the first mathematical model MD1 representing the relationship between the first flow rate F1 of the powder flowing through the first flow passage 15 and a signal S1 obtained by filtering the output of the light receiver 132 is expressed by a mathematical expression S1 = K1 × F1 + A1. Similarly, the second mathematical model MD2 representing the relationship between the second flow rate F2 of the powder flowing through the second flow passage 18 and a signal S2 obtained by filtering the output of the light receiver 192 is expressed by a mathematical expression S2 = K2 × F2 + A2. It is to be noted that the first mathematical model MD1 and the second mathematical model MD2 do not necessarily have to be expressed by such a linear function. Additionally, when the first sensor 13 and the second sensor 19 are the same products, A1 ≈ A2. Furthermore, experience shows that A1 ≈ A2 ≈ 0.

### <Generation of First Mathematical Model MD1 and Second Mathematical Model MD2>

The first mathematical model MD1 is generated as follows. The flow passage switching valve 16 is set so that the powder from the powder feeder 11 flows through the first flow passage 15. As illustrated in FIG. 4, the additional measurement instrument SC2 including a container 21 is located below the head 12. The container 21 is, for example, a tray. The additional measurement instrument SC2 is a weight scale that measures the weight of the powder that accumulates in the container 21. At the same time as when the powder is discharged from the head 12 at two or more flow rates by changing the rotational speed of the rotatable measurement disk of the powder feeder 11, the output of the first sensor 13 at that time and the changes over time in the weight on the additional measurement instrument SC2 are measured. Based on the value obtained by filtering the output of the first sensor 13 and the corresponding changes over time in the weight on the additional measurement instrument SC2, K1 and A1 can be estimated by maximum likelihood estimation such as a least-square method. That is, the amount of powder discharged from the head 12 to the container 21, which is located opposite to the outlet of the head 12 to receive the powder, is measured, and the first mathematical model MD1 is generated based on the correspondence relationship between the changes in the amount in the container 21 per unit time and the output of the first sensor 13 corresponding to the changes in the container 21. That is, the method for controlling the additive manufacturing apparatus 10 includes measuring the amount of powder discharged from the head 12 to the container 21, which is located opposite to the outlet of the head 12 to receive the powder, and generating the first mathematical model MD1 based on the correspondence relationship between the changes in the amount in the container 21 per unit time and the output of the first sensor 13 corresponding to the changes in the container 21. The control program PG causes the processor 31 to execute processes of acquiring a measured value of the amount of powder discharged from the head 12 to the container 21, which is located opposite to the outlet of the head 12 to receive the powder, and generating the first mathematical model MD1 based on the correspondence relationship between the changes in the amount in the container 21 per unit time and the output of the first sensor 13 corresponding to the changes in the container 21. After the generation of the first mathematical model MD1, the container 21 and the additional measurement instrument SC2 are removed from the additive manufacturing apparatus 10.

The second mathematical model MD2 is generated as follows. The flow passage switching valve 16 is set so that the powder from the powder feeder 11 flows through the second flow passage 18. At the same time as when the powder is discharged to the reservoir tank 17 at two or more flow rates by changing the rotational speed of the rotatable measurement disk of the powder feeder 11, the output of the second sensor 19 at that time and the changes over time in the weight on the measurement instrument SC1 are measured. Based on the value obtained by filtering the output of the second sensor 19 and the corresponding changes over time in the weight on the measurement instrument SC1, K2 and A2 can be estimated by maximum likelihood estimation such as a least-square method. That is, the mathematical model MD2 is generated based on the correspondence relationship between the changes in the amount in the reservoir tank 17 per unit time and the output of the second sensor 19 corresponding to the changes in the reservoir tank 17. That is, the method for controlling the additive manufacturing apparatus 10 includes measuring the amount of powder accumulated in the reservoir tank 17 and generating the second mathematical model MD2 based on the correspondence relationship between the changes in the amount in the reservoir tank 17 per unit time and the output of the second sensor 19 corresponding to the changes in the reservoir tank 17. The control program PG causes the processor 31 to execute processes of acquiring a measured value of the amount of powder accumulated in the reservoir tank 17 and generating the second mathematical model MD2 based on the correspondence relationship between the changes in the amount in the reservoir tank 17 per unit time and the output of the second sensor 19 corresponding to the changes in the reservoir tank 17. It is to be noted that, for a periodic calibration process, which will be discussed below, the processor 31 preferably obtains a ratio β between K2 and K1, that is, β = K1/K2 and stores the ratio β in the memory 32. The difference between K1 and K2 occurs due to the individual differences between the first sensor 13 and the second sensor 19 or the influence on the discharge by connecting the head 12 to the first flow passage 15. However, in broad terms, the ratio β does not change after long use of the additive manufacturing apparatus 10. On this premise, the additive manufacturing apparatus 10 performs the following processes.

### <Operation of Additive Manufacturing Apparatus 10 - Periodic Calibration>

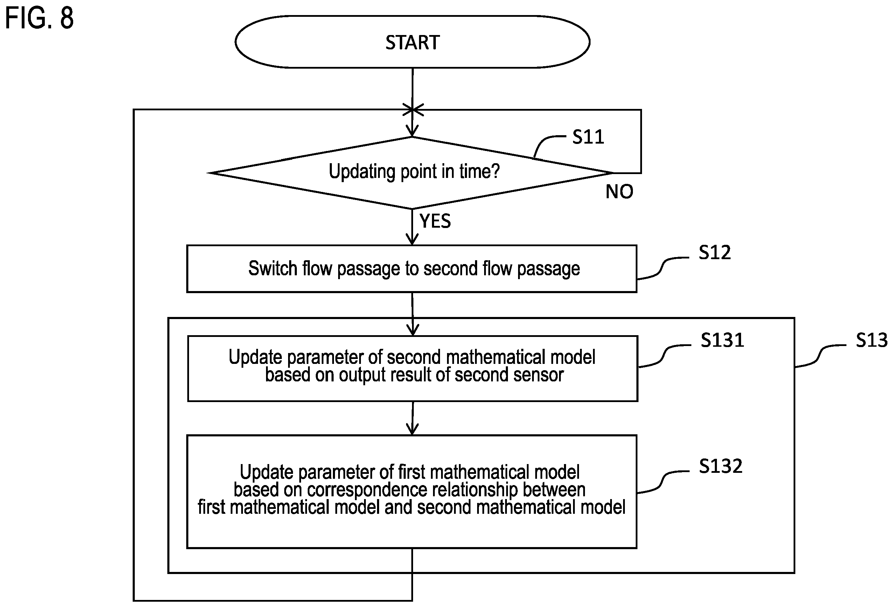

During normal operation of the additive manufacturing apparatus 10, the flow passage switching valve 16 is set so that the powder from the powder feeder 11 flows through the first flow passage 15, and the processor 31 obtains the first flow rate of the powder flowing to the head 12 by substituting the detected value of the first sensor 13 into the first mathematical model MD1. The obtained first flow rate is output to the notification device 103 and displayed on, for example, a display of the operation panel 102. The periodic calibration process illustrated in FIG. 8 is executed at periodic points in time such as a point in time when the workpiece W to be produced in the additive manufacturing apparatus 10 is replaced with a new workpiece W or a point in time before or after starting the operation of a day. Referring to FIG. 8, first, at step S11, the processor 31 determines whether it is an updating point in time, that is, whether it is the above-described periodic point in time. When it is not the updating point in time (NO at step S11), the processor 31 waits until the updating point in time comes. When it is the updating point in time (YES at step S11), at step S12, the processor 31 controls so that the flow passage switching valve 16 switches the flow passage through which the powder is to be fed from the powder feeder 11 to the second flow passage 18.

Next, at step S13, the processor 31 executes an updating process of acquiring the output of the second sensor 19 that has detected the powder flowing through the second flow passage 18 after the flow passage switching valve 16 has switched the flow passage through which the powder is to be fed from the powder feeder 11 to the second flow passage 18, and updating the first mathematical model MD1 using the output, the first mathematical model MD1, and the second mathematical model MD2. That is, the method for controlling the additive manufacturing apparatus 10 includes the updating process of acquiring the output of the second sensor 19 that has detected the powder flowing through the second flow passage 18 after the flow passage switching valve 16 has switched the flow passage through which the powder is to be fed from the powder feeder 11 to the second flow passage 18, and updating the first mathematical model MD1 using the output, the first mathematical model MD1, and the second mathematical model MD2. The control program PG causes the processor 31 to execute the updating process of acquiring the output of the second sensor 19 that has detected the powder flowing through the second flow passage 18 after the flow passage switching valve 16 has switched the flow passage through which the powder is to be fed from the powder feeder 11 to the second flow passage 18, and updating the first mathematical model MD1 using the output, the first mathematical model MD1, and the second mathematical model MD2.

At step S13, specifically, at step S131, the processor 31 acquires the output of the second sensor 19 that has detected the powder flowing through the second flow passage 18 after the flow passage switching valve 16 has switched the flow passage through which the powder is to be fed from the powder feeder 11 to the second flow passage 18. At the same time, the processor 31 also acquires the changes over time in the weight on the measurement instrument SC1 mounted on the reservoir tank 17 and updates the parameter of the second mathematical model MD2 using the acquired changes over time as the flow rate of the powder. That is, the method for controlling the additive manufacturing apparatus 10 includes acquiring the output of the second sensor 19 that has detected the powder flowing through the second flow passage 18 after the flow passage switching valve 16 has switched the flow passage through which the powder is to be fed from the powder feeder 11 to the second flow passage 18. Furthermore, the controlling method also includes simultaneously acquiring the changes over time in the weight on the measurement instrument SC1 mounted on the reservoir tank 17 and updating the parameter of the second mathematical model MD2. The control program PG causes the processor 31 to execute the process of acquiring the output of the second sensor 19 that has detected the powder flowing through the second flow passage 18 after the flow passage switching valve 16 has switched the flow passage through which the powder is to be fed from the powder feeder 11 to the second flow passage 18. Furthermore, the control program PG causes the processor 31 to execute the processes of also simultaneously acquiring the changes over time in the weight on the measurement instrument SC1 mounted on the reservoir tank 17 and updating the parameter of the second mathematical model MD2. It is to be noted that the parameter of the second mathematical model MD2 is the above-mentioned parameter K2. In the following description, the updated parameter K2 is referred to as K2'.

At step S132, the processor 31 updates the parameter of the first mathematical model MD1 based on the correspondence relationship between the first mathematical model MD1 and the second mathematical model MD2. More specifically, the processor 31 updates the parameter K1 of the first mathematical model MD1 using the above-described ratio β. That is, the method for controlling the additive manufacturing apparatus 10 includes updating the parameter of the first mathematical model MD1 based on the correspondence relationship between the first mathematical model MD1 and the second mathematical model MD2. More specifically, the method for controlling the additive manufacturing apparatus 10 includes updating the parameter K1 of the first mathematical model MD1 using the above-described ratio β. The control program PG causes the processor 31 to execute the process of updating the parameter of the first mathematical model MD1 based on the correspondence relationship between the first mathematical model MD1 and the second mathematical model MD2. More specifically, the control program PG causes the processor 31 to execute the process of updating the parameter K1 of the first mathematical model MD1 using the above-described ratio β. It is to be noted that when the updated K1 is referred to as K1', K1' = β × K2'.

Since the above-described updating process is executed at periodic points in time, the processor 31 is configured to repeat the updating process at a predetermined cycle. The method for controlling the additive manufacturing apparatus 10 repeats the updating process at a predetermined cycle. The control program PG causes the processor 31 to execute the process of repeating the updating process at a predetermined cycle. The above updating process allows the first mathematical model MD1 to be updated without removing the workpiece W from the additive manufacturing apparatus 10.

### <Detection of Abnormality in Additive Manufacturing Apparatus 10>

The processor 31 is capable of determining an abnormality in the additive manufacturing apparatus 10 by comparing the output of the first sensor 13 with the output of the second sensor 19 when the powder feeder 11 is operated under the same operating condition. The operating condition of the power feeder 11 is defined by the rotational speed of the rotatable measurement disk and the flow rate of the carrier gas. It is to be noted that, in terms of determining the location of the abnormality in the powder feeder 11, the pipe cross-sectional shape of the first flow passage 15 and the pipe cross-sectional shape of the second flow passage 18 are preferably approximately the same. This is because when the operating condition of the powder feeder 11 is the same, the first flow rate of the powder flowing through the first flow pa1ssage 15 and the second flow rate of the powder flowing through the second flow passage 18 are approximately equal. Although a variety of methods may be used to determine whether there is an abnormality, two abnormality determining methods will be described below as examples.

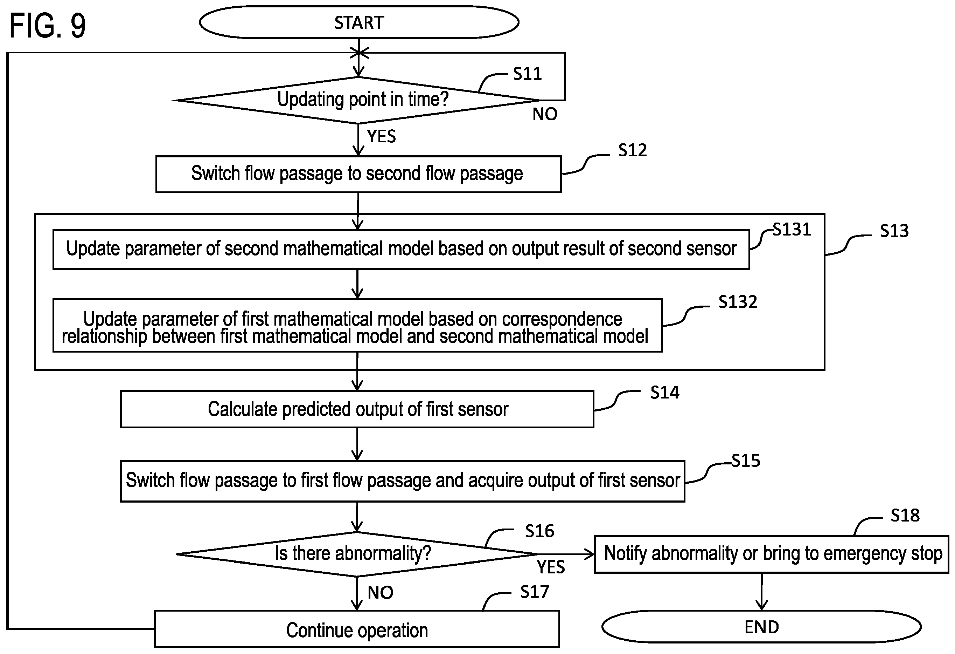

FIG. 9 is a flowchart illustrating an example flow of the abnormality determining process. FIG. 9 illustrates an example of the abnormality determining process combined with the periodic calibration process of FIG. 8. The present abnormality determining process is the same as the updating process up to step S132. At step S14, the processor 13 calculates a predicted output of the first sensor 13 when the powder feeder 11 feeds the powder to the first flow passage 15 under the same operating condition as when the powder feeder 11 feeds the powder to the second flow passage 18 using the output of the second sensor 19, the first mathematical model MD1, and the second mathematical model MD2. Specifically, since the parameter of the first mathematical model MD1 is updated at step S132, the processor 13 uses the updated parameter to calculate the predicted output of the first sensor 13 when the powder feeder 11 feeds the powder to the first flow passage 15 under the operating condition that achieves the flow rate of the powder measured by the measurement instrument SC1 at step S131. That is, the method for controlling the additive manufacturing apparatus 10 includes calculating the predicted output of the first sensor 13 when the powder feeder 11 feeds the powder to the first flow passage 15 under the same operating condition as when the powder feeder 11 feeds the powder to the second flow passage 18 using the output of the second sensor 19, the first mathematical model MD1, and the second mathematical model MD2. The method for controlling the additive manufacturing apparatus 10 includes calculating the predicted output of the first sensor 13 when the powder feeder 11 feeds the powder to the first flow passage 15 under the operating condition that achieves the flow rate of the powder measured by the measurement instrument SC1 at step S131 using the parameter of the first mathematical model MD1 updated at step S132. The control program PG causes the processor 31 to execute the process of calculating the predicted output of the first sensor 13 when the powder feeder 11 feeds the powder to the first flow passage 15 under the same operating condition as when the powder feeder 11 feeds the powder to the second flow passage 18 using the output of the second sensor 19, the first mathematical model MD1, and the second mathematical model MD2. The control program PG causes the processor 31 to execute the process of calculating the predicted output of the first sensor 13 when the powder feeder 11 feeds the powder to the first flow passage 15 under the operating condition that achieves the flow rate of the powder measured by the measurement instrument SC1 at step S131 using the parameter of the first mathematical model MD1 updated at step S132.

At step S15, the processor 31 switches the flow passage through which the powder is to be fed to the first flow passage 15 and acquires the output of the first sensor 13 when the powder feeder 11 is operated under the operating condition that is the same as the operating condition that achieves the flow rate of the powder measured by the measurement instrument SC1 at step S131. That is, the method for controlling the additive manufacturing apparatus 10 includes switching the flow passage through which the powder is to be fed to the first flow passage 15 and acquiring the output of the first sensor 13 when the powder feeder 11 is operated under the operating condition that is the same as the operating condition that achieves the flow rate of the powder measured by the measurement instrument SC1 at step S131. The control program PG causes the processor 31 to execute the processes of switching the flow passage through which the powder is to be fed to the first flow passage 15 and acquiring the output of the first sensor 13 when the powder feeder 11 is operated under the operating condition that is the same as the operating condition that achieves the flow rate of the powder measured by the measurement instrument SC1 at step S131.

At step S16, the processor 31 executes a determining process of determining whether there is an abnormality in the additive manufacturing apparatus 10 by comparing the predicted output with the output of the first sensor 13 that has detected the powder flowing through the first flow passage 15 after the flow passage switching valve 16 has switched the flow passage through which the powder is to be fed from the powder feeder 11 to the first flow passage 15. The method for controlling the additive manufacturing apparatus 10 includes the determining process of determining whether there is an abnormality in the additive manufacturing apparatus 10 by comparing the predicted output with the output of the first sensor 13 that has detected the powder flowing through the first flow passage 15 after the flow passage switching valve 16 has switched the flow passage through which the powder is to be fed from the powder feeder 11 to the first flow passage 15. The control program PG causes the processor 31 to execute the determining process of determining whether there is an abnormality in the additive manufacturing apparatus 10 by comparing the predicted output with the output of the first sensor 13 that has detected the powder flowing through the first flow passage 15 after the flow passage switching valve 16 has switched the flow passage through which the powder is to be fed from the powder feeder 11 to the first flow passage 15. For example, when an absolute value of the difference between the output of the first sensor 13 and the predicted output is greater than a predetermined threshold value, it is determined that an abnormality has occurred in the additive manufacturing apparatus 10.

In response to determining that no abnormality has occurred in the additive manufacturing apparatus 10 (NO at step S16), the operation of the additive manufacturing apparatus 10 is continued at step S17, and the process returns to step S11. That is, the processor 31 is configured to repeat the determining process at a predetermined cycle. The method for controlling the additive manufacturing apparatus 10 repeats the determining process at a predetermined cycle. The control program PG causes the processor 31 to execute the process of repeating the determining process at a predetermined cycle.

In response to determining that an abnormality has occurred in the additive manufacturing apparatus 10 (YES at step S16), at step S18, the processor 31 controls the notification device 103 to raise an alarm or brings the additive manufacturing apparatus 10 to an emergency stop. That is, the method for controlling the additive manufacturing apparatus 10 includes, in response to determining that there is an abnormality, controlling the notification device 103 for providing information to a user to raise an alarm or bringing the additive manufacturing apparatus 10 to an emergency stop. The control program PG causes, in response to determining that there is an abnormality, the processor 31 to execute the process of controlling the notification device 103 for providing information to a user to raise an alarm or bringing the additive manufacturing apparatus 10 to an emergency stop.

With the above processes, it can be periodically determined whether the additive manufacturing apparatus 10 is operating properly using a spare time such as when the workpiece W is replaced without stopping the production of the workpiece W by the additive manufacturing apparatus 10. Besides the above-mentioned spare time, the determination may be made in every step of the additive manufacturing.

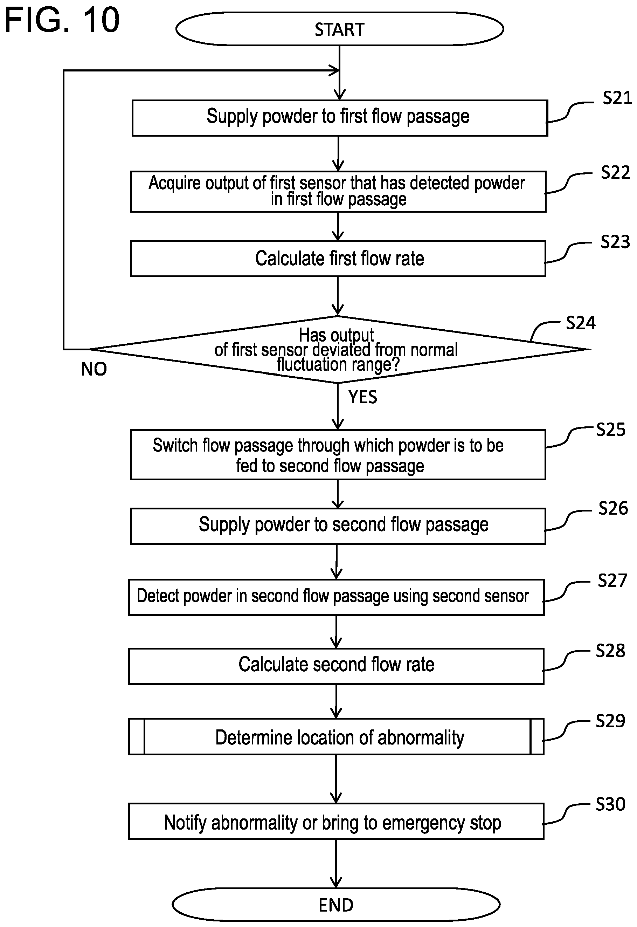

FIG. 10 is a flowchart illustrating another example flow of the abnormality determining process. At step S21, the processor 31 causes the powder feeder 11, which is set to a predetermined operating condition, to supply the powder to the first flow passage 15, which connects the powder feeder 11 to the head 12, to discharge the powder from the head 12. That is, the method for controlling the additive manufacturing apparatus 10 includes supplying the powder from the powder feeder 11, which is set to a predetermined operating condition, to the first flow passage 15, which connects the powder feeder 11 to the head 12, to discharge the powder from the head 12. The control program PG causes the processor 31 to execute the process of supplying the powder from the powder feeder 11, which is set to a predetermined operating condition, to the first flow passage 15, which connects the powder feeder 11 to the head 12, to discharge the powder from the head 12.

At step S22, the processor 31 acquires the output of the first sensor 13 that detects the powder flowing through the first flow passage 15. That is, the method for controlling the additive manufacturing apparatus 10 includes detecting the powder flowing through the first flow passage 15 using the first sensor 13. The control program PG causes the processor 31 to execute the process of acquiring the output of the first sensor 13 that detects the powder flowing through the first flow passage 15. At step S23, the processor 31 calculates the first flow rate of the powder flowing to the head 12 based on the output of the first sensor 13. That is, the method for controlling the additive manufacturing apparatus 10 includes calculating the first flow rate of the powder flowing to the head 12 based on the output of the first sensor 13. The control program PG causes the processor 31 to execute the process of calculating the first flow rate of the powder flowing to the head 12 based on the output of the first sensor 13.

At step S24, the processor 31 determines whether the output of the first sensor 13 has deviated from a normal fluctuation range while the powder is supplied to the head 12 from the powder feeder 11 operated under a certain operating condition. That is, the method for controlling the additive manufacturing apparatus 10 includes determining whether the output of the first sensor 13 has deviated from the normal fluctuation range while the powder is supplied to the head 12 from the powder feeder 11 operated under a certain operating condition. The control program PG causes the processor 31 to execute the process of determining whether the output of the first sensor 13 has deviated from the normal fluctuation range while the powder is supplied to the head 12 from the powder feeder 11 operated under a certain operating condition. The normal fluctuation range refers to a range in which the output of the first sensor 13 can be deemed normal from the first mathematical model MD1 and the operating condition of the powder feeder 11. The normal fluctuation range is obtained at the same time as when the first mathematical model MD1 is generated and is stored in the memory 32. For example, the powder feeder 11 is activated multiple times under the same operating condition when the first mathematical model MD1 is generated, and the normal fluctuation range may be set so that a value obtained by adding an offset to the maximum output of the first sensor 13 serves as the upper limit and a value obtained by subtracting an offset from the minimum output of the first sensor 13 serves as the lower limit. When the output of the first sensor 13 is within the normal fluctuation range (NO at step S24), the process returns to step S21.

When the output of the first sensor 13 deviates from the normal fluctuation range (YES at step S24), at step S25, the processor 31 switches the flow passage through which the powder is to be fed from the powder feeder 11 from the first flow passage 15 to the second flow passage 18, which connects the powder feeder 11 to the reservoir tank 17. That is, the method for controlling the additive manufacturing apparatus 10 includes switching the flow passage through which the powder is to be fed from the powder feeder 11 from the first flow passage 15 to the second flow passage 18, which connects the powder feeder 11 to the reservoir tank 17. The control program PG causes the processor 31 to execute the process of switching the flow passage through which the powder is to be fed from the powder feeder 11 from the first flow passage 15 to the second flow passage 18, which connects the powder feeder 11 to the reservoir tank 17.

At step S26, the processor 31 causes the powder feeder 11 that is set to the predetermined operating condition to feed the powder to the second flow passage 18. That is, the method for controlling the additive manufacturing apparatus 10 includes feeding the powder from the powder feeder 11 that is set to the predetermined operating condition to the reservoir tank 17 through the second flow passage 18. The control program PG causes the processor 31 to execute the process of making the powder feeder 11 that is set to the predetermined operating condition to feed the powder to the second flow passage 18. It is to be noted that the operating condition of the powder feeder 11 at step S21 is the same as the operating condition of the powder feeder 11 at step S26.

At step S27, the processor 31 acquires the output of the second sensor 19 that detects the powder flowing through the second flow passage 18. That is, the method for controlling the additive manufacturing apparatus 10 includes detecting the powder flowing through the second flow passage 18 using the second sensor 19. The control program PG causes the processor 31 to execute the process of acquiring the output of the second sensor 19 that detects the powder flowing through the second flow passage 18. At step S28, the processor 31 calculates the second flow rate of the powder flowing to the reservoir tank 17 based on the output of the second sensor 19. That is, the method for controlling the additive manufacturing apparatus 10 includes calculating the second flow rate of the powder flowing to the reservoir tank 17 based on the output of the second sensor 19. The control program PG causes the processor 31 to execute the process of calculating the second flow rate of the powder flowing to the reservoir tank 17 based on the output of the second sensor 19.

At step S29, the processor 31 determines whether an abnormality is in the powder feeder 11 or in at least one of units including the first flow passage 15 and the first sensor 13 based on the output of the first sensor 13 and the output of the second sensor 19. That is, the method for controlling the additive manufacturing apparatus 10 includes determining whether an abnormality is in the powder feeder 11 or in at least one of the units including the first flow passage 15 and the first sensor 13 based on the output of the first sensor 13 and the output of the second sensor 19. The control program PG causes the processor 31 to execute the process of determining whether an abnormality is in the powder feeder 11 or in at least one of the units including the first flow passage 15 and the first sensor 13 based on the output of the first sensor 13 and the output of the second sensor 19.

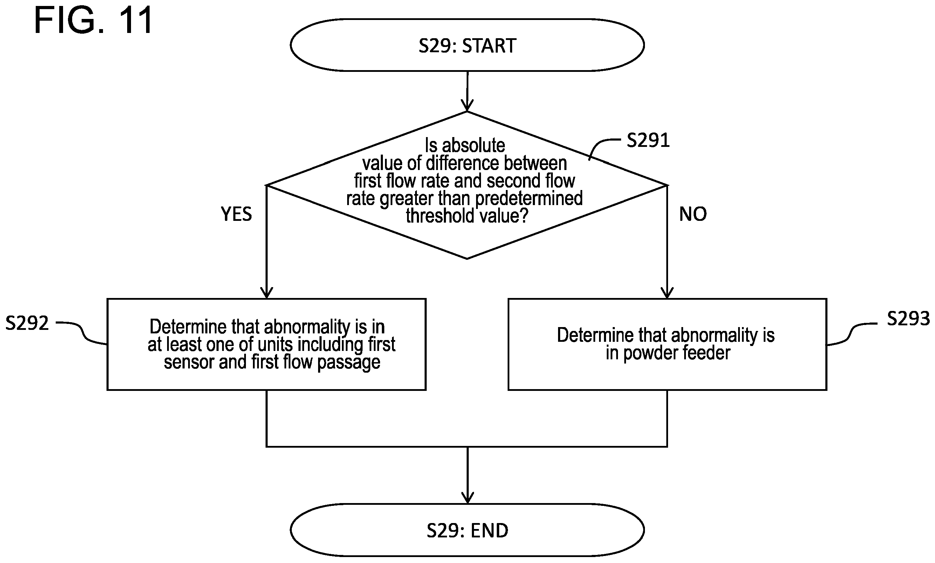

FIG. 11 is a flowchart illustrating a flow of a detailed process of step S29. At step S291, the processor 31 determines whether an absolute value of the difference between the first flow rate calculated from the output of the first sensor 13 and the second flow rate calculated from the output of the second sensor 19 is greater than a predetermined threshold value. The method for controlling the additive manufacturing apparatus 10 includes determining whether the absolute value of the difference between the first flow rate calculated from the output of the first sensor 13 and the second flow rate calculated from the output of the second sensor 19 is greater than the predetermined threshold value. The control program PG causes the processor 31 to execute the process of determining whether the absolute value of the difference between the first flow rate calculated from the output of the first sensor 13 and the second flow rate calculated from the output of the second sensor 19 is greater than the predetermined threshold value. The predetermined threshold value is determined in advance and stored in the memory 32.

When the absolute value of the difference between the first flow rate and the second flow rate is greater than the predetermined threshold value (YES at step S291), at step S292, the processor 31 determines that an abnormality has occurred in at least one of the units including the first sensor 13 and the first flow passage 15. That is, the method for controlling the additive manufacturing apparatus 10 includes determining that an abnormality has occurred in at least one of the units including the first sensor 13 and the first flow passage 15 when the absolute value of the difference between the first flow rate and the second flow rate is greater than the predetermined threshold value. The control program PG causes the processor 31 to execute the process of determining that an abnormality has occurred in at least one of the units including the first sensor 13 and the first flow passage 15 when the absolute value of the difference between the first flow rate and the second flow rate is greater than the predetermined threshold value.

When the absolute value of the difference between the first flow rate and the second flow rate is less than or equal to the predetermined threshold value (NO at step S291), at step S293, the processor 31 determines that an abnormality has occurred in the powder feeder 11. That is, the method for controlling the additive manufacturing apparatus 10 includes determining that an abnormality has occurred in the powder feeder 11 when the absolute value of the difference between the first flow rate and the second flow rate is less than or equal to the predetermined threshold value. The control program PG causes the processor 31 to execute the process of determining that an abnormality has occurred in the powder feeder 11 when the absolute value of the difference between the first flow rate and the second flow rate is less than or equal to the predetermined threshold value.

### <Operations and Effects of the Embodiments>

The additive manufacturing apparatus 10, the multi-tasking apparatus 100, the method for controlling the additive manufacturing apparatus 10, and the control program PG for the additive manufacturing apparatus 10 according to the present embodiment switch from the first flow passage 15, which connects the powder feeder 11 to the head 12, to the second flow passage 18, which connects the powder feeder 11 to the reservoir tank 17, and calculate the first flow rate of the powder flowing to the head 12 and the second flow rate of the powder flowing to the reservoir tank 17. Thus, even if an abnormality occurs in the additive manufacturing apparatus 10, the cause of the abnormality can be investigated without removing the workpiece W from the additive manufacturing apparatus 10. Additionally, in the additive manufacturing apparatus 10, the powder feeder 11 can be checked for proper operation or the first sensor 13 can be calibrated while the workpiece W is not machined such as during transferring.

### <Modification>

The abnormality determining method according to the present embodiment is not intended as limiting and may be other methods as long as the abnormality determining method utilizes the configuration of the additive manufacturing apparatus 10 described in the embodiment. Additionally, the measurement instrument SC1 and the additional measurement instrument SC2 are not limited to a weight scale and may be one that measures the volume of the powder. In this case, the flow rate of the powder may be the volume of the powder that flowed through each of the first flow passage 15 and the second flow passage 18 per unit time.

When the method that expresses the periodic calibration process and the abnormality determining process illustrated in the present embodiment in a more generic concept is referred to as the method for controlling the additive manufacturing apparatus 10, the method for controlling the additive manufacturing apparatus 10 includes at least steps S21 to S23 and steps S25 to S27 of FIG. 10. Additionally, the control program PG for the additive manufacturing apparatus 10 causes the processor 31 to execute the processes of at least steps S21 to S23 and steps S21 to 27 of FIG. 10. It is to be noted, however, that the processes other than the above-described periodic calibration process and the abnormality determination process may be replaced with other processes.

The control program PG described above does not necessarily have to be the one stored in the memory 32 integrated in the controller CL but may be the one that is stored in a storage medium removable from the controller CL and readable by the controller CL including, for example, disks such as a floppy disk, an optical disk, a CD-ROM, or a magnetic disk, an SD card, a USB memory, or an external hard disk.

As used herein, the term "comprise" and its variations are intended to mean openended terms, not excluding any other elements and/or components that are not recited herein. The same applies to the terms "include", "have", and their variations.

As used herein, a component suffixed with a term such as "member", "portion", "part", "element", "body", and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

As used herein, approximating language such as "approximately", "about", and "substantially" may be applied to modify any quantitative representation that could permissibly vary without a significant change in the final result obtained. All of the quantitative representations recited herein shall be construed to be modified by approximating language such as "approximately", "about", and "substantially".

As used herein, the phrase "at least one of A and B" is intended to be interpreted as "only A", "only B", or "both A and B".

Obviously, numerous modifications and variations of the present invention are possible in light of the above teachings, i.e. the scope of the present invention is defined by the appended claims.

## Claims

1. An additive manufacturing apparatus (10) comprising:
a powder feeder (11) configured to feed powder using a carrier gas;
a head (12) configured to discharge the powder;
a first flow passage (15) connecting the powder feeder to the head (12), the first flow passage (15) being for supplying the powder from the powder feeder (11) to the head (12);
a flow passage switching valve (16) disposed in a middle of the first flow passage (15);
a reservoir tank (17) configured to receive the powder fed from the powder feeder (11);
a second flow passage (18) connecting the flow passage switching valve (16) to the reservoir tank (17), the second flow passage (18) being for feeding the powder from the powder feeder (11) to the reservoir tank (17), wherein the flow passage switching valve (16) is capable of alternatively selecting whether to supply the powder from the powder feeder (11) to the head (12) or to the reservoir tank (17);
the additive manufacturing apparatus (10) being **characterized by** further comprising:
a first sensor (13) that is disposed in the first flow passage (15) between the flow passage switching valve (16) and the head (12) and is configured to detect a first flow rate of the powder flowing to the head (12);
a second sensor (19) that is disposed in the second flow passage (18) and is configured to detect a second flow rate of the powder flowing to the reservoir tank (17);
a memory (32) configured to store a first mathematical model, which describes a relationship between an output of the first sensor (13) and the first flow rate of the powder, and a second mathematical model, which describes a relationship between an output of the second sensor (19) and the second flow rate of the powder; and
a processor (31) configured to calculate the first flow rate from the output of the first sensor (13) based on the first mathematical model and the second flow rate from the output of the second sensor (19) based on the second mathematical model,
wherein the processor (31) is configured to determine whether there is an abnormality in the additive manufacturing apparatus (10) by comparing the output of the first sensor (13) when the powder is fed from the powder feeder (11), which is operated under a predetermined operating condition, to the first flow passage (15) with the output of the second sensor (19) when the powder is fed from the powder feeder (11), which is operated under the predetermined operating condition, to the second flow passage (18).

2. The additive manufacturing apparatus (10) according to claim 1, further comprising a measurement instrument (SC1) capable of measuring an amount of powder accumulated in the reservoir tank (17),
wherein the second mathematical model is generated based on a correspondence relationship between a change in the amount of powder in the reservoir tank (17) per unit time and the output of the second sensor (19) corresponding to the change in the reservoir tank (17).

3. The additive manufacturing apparatus (10) according to claim 1 or 2, wherein an amount of powder discharged from the head (12) to a container (21), which is located opposite to an outlet of the head (12) to receive the powder, is measured, and the first mathematical model is generated based on a correspondence relationship between a change in the amount of powder in the container (21) per unit time and the output of the first sensor (13) corresponding to the change in the container (21).

4. The additive manufacturing apparatus (10) according to any one of claims 1 to 3, wherein the processor (31) is configured to execute an updating process of acquiring the output of the second sensor (19) that has detected the powder flowing through the second flow passage (18) after the flow passage switching valve (16) has switched the flow passage (15, 18) through which the powder is to be fed from the powder feeder (11) to the second flow passage (18), and updating the first mathematical model using the output, the first mathematical model, and the second mathematical model.

5. The additive manufacturing apparatus (10) according to claim 4, wherein the processor (31) is configured to repeat the updating process at a predetermined cycle.

6. The additive manufacturing apparatus (10) according to any one of claims 1 to 5, wherein, when the output of the first sensor (13) deviates from a normal fluctuation range while the powder is supplied to the head (12) from the powder feeder (11), which is operated under a certain operating condition, the processor (31) is configured to switch the flow passage (15, 18) through which the powder is to be fed from the powder feeder (11) to the second flow passage (18) using the flow passage switching valve (16), acquire the output of the second sensor (19) that has detected the powder flowing to the reservoir tank (17) from the powder feeder (11), which is operated under the certain operating condition, and determine whether an abnormality occurs in the powder feeder (11) or in at least one of units including the first flow passage (15) and the first sensor (13) based on the output of the first sensor (13) and the output of the second sensor (19).

7. The additive manufacturing apparatus (10) according to claim 6, wherein, when an absolute value of a difference between the first flow rate calculated from the output of the first sensor (13) and the second flow rate calculated from the output of the second sensor (19) is greater than a predetermined threshold value, the processor (31) is configured to determine that an abnormality has occurred in at least one of the units including the first sensor (13) and the first flow passage (15).

8. The additive manufacturing apparatus (10) according to claim 6 or 7, wherein, when an absolute value of a difference between the first flow rate calculated from the output of the first sensor (13) and the second flow rate calculated from the output of the second sensor (19) is less than or equal to a predetermined threshold value, the processor (31) is configured to determine that an abnormality has occurred in the powder feeder (11).

9. The additive manufacturing apparatus (10) according to any one of claims 1 to 8, further comprising a notification device (103) configured to provide information to a user,
wherein, in response to determining the abnormality in the additive manufacturing apparatus (10), the processor (31) is configured to control the notification device (103) to raise an alarm or to bring the additive manufacturing apparatus (10) to an emergency stop.

10. The additive manufacturing apparatus (10) according to any one of claims 1 to 9,
wherein the first sensor (13) and the second sensor (19) comprise optical sensors, and
wherein the first flow passage (15) comprises a first transmissive window (W1) that allows light of the first sensor (13) to pass through, and the second flow passage (18) comprises a second transmissive window (W2) that allows light of the second sensor (19) to pass through.

11. A multi-tasking apparatus (100) comprising:
the additive manufacturing apparatus (10) according to any one of claims 1 to 10; and
a cutting device (106) configured to perform a cutting process.

12. A method for controlling an additive manufacturing apparatus (10), the method comprising:
supplying powder from a powder feeder (11) set to a predetermined operating condition to a first flow passage (15), which connects the powder feeder (11) to a head (12), to discharge the powder from the head (12);
detecting the powder flowing through the first flow passage (15) using a first sensor (13);
calculating a first flow rate of the powder flowing to the head (12) based on an output of the first sensor (13);
switching a flow passage (15, 18) through which the powder is to be fed from the powder feeder (11) from the first flow passage (15) to a second flow passage (18), which connects the powder feeder (11) to a reservoir tank (17);
feeding the powder from the powder feeder (11) set to the predetermined operating condition to the reservoir tank (17) through the second flow passage (18);
detecting the powder flowing through the second flow passage (18) using a second sensor (19);
calculating a second flow rate of the powder flowing to the reservoir tank (17) based on an output of the second sensor (19);
calculating the first flow rate from the output of the first sensor (13) based on a first mathematical model, which describes a relationship between the output of the first sensor (13) and the first flow rate of the powder;
calculating the second flow rate from the output of the second sensor (19) based on a second mathematical model, which describes a relationship between the output of the second sensor (19) and the second flow rate of the powder, and
determining whether there is an abnormality in the additive manufacturing apparatus (10) by comparing the output of the first sensor (13) when the powder is fed from the powder feeder (11), which is operated under the predetermined operating condition, to the first flow passage (15) with the output of the second sensor (19) when the powder is fed from the powder feeder (11), which is operated under the predetermined operating condition, to the second flow passage (18).

13. A control program (PG) for an additive manufacturing apparatus according to claim 1 that causes a processor (31) to execute the method according to claim 12.

## Patentansprüche

1. Additivherstellungsgerät (10), das Folgendes aufweist:
eine Pulverzufuhreinrichtung (11), die gestaltet ist, um ein Pulver mittels eines Trägergases zuzuführen;
einen Kopf (12), der gestaltet ist, um das Pulver abzugeben;
einen ersten Strömungsdurchgang (15), der die Pulverzufuhreinrichtung mit dem Kopf (12) verbindet, wobei der erste Strömungsdurchgang (15) zum Fördern des Pulvers von der Pulverzufuhreinrichtung (11) zu dem Kopf (12) dient;
ein Strömungsdurchgangsumschaltventil (16), das in einer Mitte des ersten Strömungsdurchgangs (15) angeordnet ist;
einen Reservoirtank (17), der gestaltet ist, um das Pulver, das von der Pulverzufuhreinrichtung (11) zugeführt wird, aufzunehmen;
einen zweiten Strömungsdurchgang (18), der das Strömungsdurchgangsumschaltventil (16) mit dem Reservoirtank (17) verbindet, wobei der zweite Strömungsdurchgang (18) zum Fördern des Pulvers von der Pulverzufuhreinrichtung (11) zu dem Reservoirtank (17) dient, wobei das Strömungsdurchgangsumschaltventil (16) in der Lage ist, wahlweise umzuschalten, ob das Pulver von der Pulverzufuhreinrichtung (11) zu dem Kopf (12) oder zu dem Reservoirtank (17) zugeführt wird;
das Additivherstellungsgerät (10) **dadurch gekennzeichnet ist, dass** es des Weiteren Folgendes aufweist:
einen ersten Sensor (13), der in dem ersten Strömungsdurchgang (15) zwischen dem Strömungsdurchgangsumschaltventil (16) und dem Kopf (12) angeordnet ist und gestaltet ist, um eine erste Strömungsrate des Pulvers, das zu dem Kopf (12) strömt, zu erfassen;
einen zweiten Sensor (19), der in dem zweiten Strömungsdurchgang (18) angeordnet ist und gestaltet ist, um eine zweite Strömungsrate des Pulvers, das zu dem Reservoirtank (17) strömt, zu erfassen;
einen Speicher (32), der gestaltet ist, um ein erstes mathematisches Modell, das ein Verhältnis zwischen einer Ausgabe des ersten Sensors (13) und der ersten Strömungsrate des Pulvers beschreibt, und ein zweites mathematisches Modell, das ein Verhältnis zwischen einer Ausgabe des zweiten Sensors (19) und der zweiten Strömungsrate des Pulvers beschreibt, zu speichern; und
einen Prozessor (31), der gestaltet ist, um die erste Strömungsrate aus der Ausgabe des ersten Sensors (13) auf der Grundlage des ersten mathematischen Modells und die zweite Strömungsrate aus der Ausgabe des zweiten Sensors (19) auf der Grundlage des zweiten mathematischen Modells zu berechnen,
wobei der Prozessor (31) gestaltet ist, um zu bestimmen, ob es eine Abnormalität in dem Additivherstellungsgerät (10) gibt, indem die Ausgabe des ersten Sensors (13), wenn das Pulver von der Pulverzufuhreinrichtung (11), die gemäß einer vorbestimmten Betriebsbedingung betrieben wird, zu dem ersten Strömungsdurchgang (15) zugeführt wird, mit der Ausgabe des zweiten Sensors (19), wenn das Pulver von der Pulverzufuhreinrichtung (11), die gemäß der vorbestimmten Betriebsbedingung betrieben wird, zu dem zweiten Strömungsdurchgang (18) zugeführt wird, verglichen wird.

2. Additivherstellungsgerät (10) nach Anspruch 1, das des Weiteren ein Messinstrument (SC1) aufweist, das in der Lage ist, eine Pulvermenge, die sich in dem Reservoirtank (11) ansammelt, zu messen,
wobei das zweite mathematische Modell auf der Grundlage eines Korrespondenzverhältnisses zwischen einer Änderung bei der Pulvermenge in dem Reservoirtank (11) pro Einheitszeit und der Ausgabe des zweiten Sensors (19) korrespondierend zu der Änderung in dem Reservoirtank (17) erzeugt wird.

3. Additivherstellungsgerät (10) nach Anspruch 1 oder 2, wobei eine Pulvermenge, die von dem Kopf (12) zu einem Behälter (21), der gegenüberliegend zu einem Auslass des Kopfs (12) angeordnet ist, um das Pulver aufzunehmen, abgegeben wird, gemessen wird und das erste mathematische Modell auf der Grundlage eines Korrespondenzverhältnisses zwischen einer Änderung bei der Pulvermenge in dem Behälter (21) pro Einheitszeit und der Ausgabe des ersten Sensors (13) korrespondierend zu der Änderung in dem Behälter (21) erzeugt wird.

4. Additivherstellungsgerät (10) nach einem der Ansprüche 1 bis 3, wobei der Prozessor (31) gestaltet ist, um einen Aktualisierungsprozess zum Ermitteln der Ausgabe des zweiten Sensors (19), der das Pulver, das durch den zweiten Strömungsdurchgang (18) strömt, nachdem das Strömungsdurchgangsumschaltventil (16) den Strömungsdurchgang (15, 18) umgeschaltet hat, durch den das Pulver von der Pulverzufuhreinrichtung (11) zu dem zweiten Strömungsdurchgang (18) gefördert werden soll, erfasst hat, und zum Aktualisieren des ersten mathematischen Modells mittels der Ausgabe, des ersten mathematischen Modells und des zweiten mathematischen Modells auszuführen.

5. Additivherstellungsgerät (10) nach Anspruch 4, wobei der Prozessor (31) gestaltet ist, um den Aktualisierungsprozess in einem vorbestimmten Zyklus zu wiederholen.

6. Additivherstellungsgerät (10) nach einem der Ansprüche 1 bis 5, wobei, wenn die Ausgabe des ersten Sensors (13) von einem normalen Schwankungsbereich abweicht, während das Pulver zu dem Kopf (12) von der Pulverzufuhreinrichtung (11) gefördert wird, die gemäß einer gewissen Betriebsbedingung betrieben wird, der Prozessor (31) gestaltet ist, um den Strömungsdurchgang (15, 18), durch den das Pulver von der Pulverzufuhreinrichtung (11) zuzuführen ist, auf den zweiten Strömungsdurchgang (18) mittels des Strömungsdurchgangsumschaltventils (16) umzuschalten, die Ausgabe des zweiten Sensors (19), der das Pulver, das zu dem Reservoirtank (17) von der Pulverzufuhreinrichtung (11) strömt, die gemäß der gewissen Betriebsbedingung betrieben wird, erfasst hat, zu ermitteln und zu bestimmen, ob eine Abnormalität in der Pulverzufuhreinrichtung (11) oder in zumindest einer der Einheiten einschließlich des ersten Strömungsdurchgangs (15) und des ersten Sensors (13) auftritt, auf der Grundlage der Ausgabe des ersten Sensors (13) und der Ausgabe des zweiten Sensors (19).

7. Additivherstellungsgerät (10) nach Anspruch 6, wobei, wenn ein Absolutwert einer Differenz zwischen der ersten Strömungsrate, die aus der Ausgabe des ersten Sensors (13) berechnet wird, und der zweiten Strömungsrate, die aus der Ausgabe des zweiten Sensors (19) berechnet wird, größer ist als ein vorbestimmter Schwellenwert, der Prozessor (31) gestaltet ist, um zu bestimmen, dass eine Abnormalität in zumindest einer der Einheiten einschließlich des ersten Sensors (13) und des ersten Strömungsdurchgangs (15) aufgetreten ist.

8. Additivherstellungsgerät (10) nach Anspruch 6 oder 7, wobei, wenn ein Absolutwert einer Differenz zwischen der ersten Strömungsrate, die aus der Ausgabe des ersten Sensors (13) berechnet wird, und der zweiten Strömungsrate, die aus der Ausgabe des zweiten Sensors (19) berechnet wird, kleiner ist als oder gleich ist wie ein vorbestimmter Schwellenwert, der Prozessor (31) gestaltet ist, um zu bestimmen, dass eine Abnormalität in der Pulverzufuhreinrichtung (11) aufgetreten ist.

9. Additivherstellungsgerät (10) nach einem der Ansprüche 1 bis 8, das des Weiteren eine Benachrichtigungsvorrichtung (103) aufweist, die gestaltet ist, um eine Information für einen Anwender vorzusehen,
wobei in Erwiderung auf eine Bestimmung der Abnormalität in dem Additivherstellungsgerät (10) der Prozessor (31) gestaltet ist, um die Benachrichtigungsvorrichtung (103) zu steuern, um einen Alarm auszugeben oder um das Additivherstellungsgerät (10) in einen Notfallstopp zu stellen.

10. Additivherstellungsgerät (10) nach einem der Ansprüche 1 bis 9,
wobei der erste Sensor (13) und der zweite Sensor (19) optische Sensoren aufweisen, und
wobei der erste Strömungsdurchgang (15) ein erstes Transmissionsfenster (W1) aufweist, das es ermöglicht, dass Licht des ersten Sensors (13) hindurchtritt, und der zweite Strömungsdurchgang (18) ein zweites Transmissionsfenster (W2) aufweist, das es ermöglicht, dass Licht des zweiten Sensors (19) hindurchtritt.

11. Multifunktionsgerät (100), das Folgendes aufweist:
das Additivherstellungsgerät (10) nach einem der Ansprüche 1 bis 10; und
eine Schneidevorrichtung (106), die gestaltet ist, um einen Brennprozess auszuführen.

12. Verfahren zum Steuern eines Additivherstellungsgeräts (10), wobei das Verfahren Folgendes aufweist:
Fördern eines Pulvers von einer Pulverzufuhreinrichtung (11), die auf eine vorbestimmte Betriebsbedingung festgelegt ist, zu einem ersten Strömungsdurchgang (15), der die Pulverzufuhreinrichtung (11) mit einem Kopf (12) verbindet, um das Pulver von dem Kopf (12) abzugeben;
Erfassen des Pulvers, das durch den ersten Strömungsdurchgang (15) strömt, mittels eines ersten Sensors (13);
Berechnen einer ersten Strömungsrate des Pulvers, das zu dem Kopf (12) strömt, auf der Grundlage einer Ausgabe des ersten Sensors (13);
Umschalten eines Strömungsdurchgangs (15, 18), durch den das Pulver von der Pulverzufuhreinrichtung (11) zuzuführen ist, von dem ersten Strömungsdurchgang (15) auf einen zweiten Strömungsdurchgang (18), der die Pulverzufuhreinrichtung (11) mit einem Reservoirtank (17) verbindet;
Zuführen des Pulvers von der Pulverzufuhreinrichtung (11), die auf die vorbestimmte Betriebsbedingung festgelegt ist, zu dem Reservoirtank (17) durch den zweiten Strömungsdurchgang (18);
Erfassen des Pulvers, das durch den zweiten Strömungsdurchgang (18) strömt, mittels eines zweiten Sensors (19);
Berechnen einer zweiten Strömungsrate des Pulvers, das zu dem Reservoirtank (17) strömt, auf der Grundlage einer Ausgabe des zweiten Sensors (19);
Berechnen der ersten Strömungsrate aus der Ausgabe des ersten Sensors (13) auf der Grundlage eines ersten mathematischen Modells, das ein Verhältnis zwischen der Ausgabe des ersten Sensors (13) und der ersten Strömungsrate des Pulvers beschreibt;
Berechnen der zweiten Strömungsrate aus der Ausgabe des zweiten Sensors (19) auf der Grundlage eines zweiten mathematischen Modells, das ein Verhältnis zwischen der Ausgabe des zweiten Sensors (19) und der zweiten Strömungsrate des Pulvers beschreibt, und
Bestimmen, ob eine Abnormalität in dem Additivherstellungsgerät (10) vorliegt, indem die Ausgabe des ersten Sensors (13), wenn das Pulver von der Pulverzufuhreinrichtung (11), die gemäß der vorbestimmten Betriebsbedingung betrieben wird, zu dem ersten Strömungsdurchgang (15) zugeführt wird, mit der Ausgabe des zweiten Sensors (19), wenn das Pulver, das von der Pulverzufuhreinrichtung (11), die gemäß der vorbestimmten Betriebsbedingung betrieben wird, zu dem zweiten Strömungsdurchgang (18) zugeführt wird, verglichen wird.

13. Steuerungsprogramm (PG) für ein Additivherstellungsgerät nach Anspruch 1, das bewirkt, dass ein Prozessor (31) das Verfahren nach Anspruch 12 ausführt.

## Revendications

1. Appareil de fabrication additive (10) comprenant :
un dispositif d'alimentation en poudre (11) configuré pour alimenter en poudre à l'aide d'un gaz porteur ;
une tête (12) configurée pour décharger la poudre ;
un premier passage d'écoulement (15) reliant le dispositif d'alimentation en poudre à la tête (12), le premier passage d'écoulement (15) servant à faire passer la poudre à partir du dispositif d'alimentation en poudre (11) vers la tête (12) ;
une vanne de commutation de passage d'écoulement (16) placée au milieu du premier passage d'écoulement (15) ;
un réservoir (17) configuré pour recevoir la poudre alimentée par le dispositif d'alimentation en poudre (11) ;
un deuxième passage d'écoulement (18) qui relie la vanne de commutation de passage d'écoulement (16) au réservoir (17), le deuxième passage d'écoulement (18) servant à alimenter le réservoir (17) en poudre à partir du dispositif d'alimentation en poudre (11), dans lequel la vanne de commutation de passage d'écoulement (16) est capable de choisir alternativement d'alimenter la tête (12) ou le réservoir (17) en poudre à partir du dispositif d'alimentation en poudre (11) ;
l'appareil de fabrication additive (10) étant **caractérisé en ce qu'**il comprend en outre :
un premier capteur (13) qui est disposé dans le premier passage d'écoulement (15) entre la vanne de commutation de passage d'écoulement (16) et la tête (12) et qui est configuré pour détecter un premier débit de la poudre qui écoule vers la tête (12) ;
un deuxième capteur (19) qui est disposé dans le deuxième passage d'écoulement (18) et qui est configuré pour détecter un deuxième débit de la poudre qui écoule vers le réservoir (17) ;
une mémoire (32) configurée pour stocker un premier modèle mathématique, qui décrit une relation entre une sortie du premier capteur (13) et le premier débit de la poudre, et un deuxième modèle mathématique, qui décrit une relation entre une sortie du deuxième capteur (19) et le deuxième débit de la poudre ; et
un processeur (31) configuré pour calculer le premier débit à partir de la sortie du premier capteur (13) sur la base du premier modèle mathématique et le deuxième débit à partir de la sortie du deuxième capteur (19) sur la base du deuxième modèle mathématique,
dans lequel le processeur (31) est configuré pour déterminer s'il y a une anomalie dans l'appareil de fabrication additive (10) en comparant la sortie du premier capteur (13) quand la poudre est alimentée à partir du dispositif d'alimentation en poudre (11), qui fonctionne dans une condition de fonctionnement prédéterminée, vers le premier passage d'écoulement (15) avec la sortie du deuxième capteur (19) quand la poudre est alimentée à partir du dispositif d'alimentation en poudre (11), qui fonctionne dans la condition de fonctionnement prédéterminée, vers le deuxième passage d'écoulement (18).

2. Appareil de fabrication additive (10) selon la revendication 1, comprenant en outre un instrument de mesure (SC1) capable de mesurer une quantité de poudre accumulée dans le réservoir (17),
dans lequel le deuxième modèle mathématique est généré sur la base d'une relation de correspondance entre un changement de la quantité de poudre dans le réservoir (17) par unité de temps et la sortie du deuxième capteur (19) correspondant au changement dans le réservoir (17).

3. Appareil de fabrication additive (10) selon la revendication 1 ou 2, dans lequel une quantité de poudre déchargée de la tête (12) vers un récipient (21), qui est situé à l'opposé d'une sortie de la tête (12) pour recevoir la poudre, est mesurée, et le premier modèle mathématique est généré sur la base d'une relation de correspondance entre un changement de la quantité de poudre dans le récipient (21) par unité de temps et la sortie du premier capteur (13) correspondant au changement dans le récipient (21).

4. Appareil de fabrication additive (10) selon l'une quelconque des revendications 1 à 3, dans lequel le processeur (31) est configuré pour exécuter un processus de mise à jour consistant à acquérir la sortie du deuxième capteur (19) qui a détecté la poudre s'écoulant à travers le deuxième passage d'écoulement (18) après que la vanne de commutation de passage d'écoulement (16) a commuté le passage d'écoulement (15, 18) à travers lequel la poudre doit être alimentée à partir du dispositif d'alimentation en poudre (11) vers le deuxième passage d'écoulement (18), et de mettre à jour le premier modèle mathématique en utilisant la sortie, le premier modèle mathématique et le deuxième modèle mathématique.

5. Appareil de fabrication additive (10) selon la revendication 4, dans lequel le processeur (31) est configuré pour répéter le processus de mise à jour à un cycle prédéterminé.

6. Appareil de fabrication additive (10) selon l'une quelconque des revendications 1 à 5, dans lequel, quand la sortie du premier capteur (13) s'écarte d'une plage de fluctuation normale pendant que la poudre est alimentée à la tête (12) à partir du dispositif d'alimentation en poudre (11), qui fonctionne dans une certaine condition de fonctionnement, le processeur (31) est configuré pour commuter le passage d'écoulement (15, 18) à travers lequel la poudre doit être alimentée à partir du dispositif d'alimentation en poudre (11) vers le deuxième passage d'écoulement (18) en utilisant la vanne de commutation de passage d'écoulement (16), acquérir la sortie du deuxième capteur (19) qui a détecté la poudre s'écoulant vers le réservoir (17) à partir du dispositif d'alimentation en poudre (11), qui fonctionne dans la certaine condition de fonctionnement, et de déterminer si une anomalie se produit dans le dispositif d'alimentation en poudre (11) ou dans au moins une des unités comportant le premier passage d'écoulement (15) et le premier capteur (13) sur la base de la sortie du premier capteur (13) et de la sortie du deuxième capteur (19).

7. Appareil de fabrication additive (10) selon la revendication 6, dans lequel, quand la valeur absolue d'une différence entre le premier débit calculé à partir de la sortie du premier capteur (13) et le deuxième débit calculé à partir de la sortie du deuxième capteur (19) est supérieure à une valeur seuil prédéterminée, le processeur (31) est configuré pour déterminer qu'une anomalie s'est produite dans au moins une des unités comportant le premier capteur (13) et le premier passage d'écoulement (15).

8. Appareil de fabrication additive (10) selon la revendication 6 ou 7, dans lequel, quand la valeur absolue de la différence entre le premier débit calculé à partir de la sortie du premier capteur (13) et le deuxième débit calculé à partir de la sortie du deuxième capteur (19) est inférieure ou égale à une valeur seuil prédéterminée, le processeur (31) est configuré pour déterminer qu'une anomalie s'est produite dans le dispositif d'alimentation en poudre (11).

9. Appareil de fabrication additive (10) selon l'une quelconque des revendications 1 à 8, comprenant en plus un dispositif de notification (103) configuré pour fournir des informations à un utilisateur,
dans lequel, en réponse à la détermination de l'anomalie dans l'appareil de fabrication additive (10), le processeur (31) est configuré pour commander le dispositif de notification (103) afin de déclencher une alarme ou d'arrêter l'appareil de fabrication additive (10) en urgence.

10. Appareil de fabrication additive (10) selon l'une quelconque des revendications 1 à 9,
dans lequel le premier capteur (13) et le deuxième capteur (19) comprennent des capteurs optiques, et
dans lequel le premier passage d'écoulement (15) comprend une première fenêtre transmissive (W1) qui laisse passer la lumière du premier capteur (13), et le deuxième passage d'écoulement (18) comprend une deuxième fenêtre transmissive (W2) qui laisse passer la lumière du deuxième capteur (19).

11. Appareil multitâche (100) comprenant :
l'appareil de fabrication additive (10) selon l'une quelconque des revendications 1 à 10 ; et
un dispositif de découpe (106) configuré pour effectuer un processus de découpe.

12. Procédé de commande d'un appareil de fabrication additive (10), le procédé comprenant :
l'alimentation de poudre à partir d'un dispositif d'alimentation en poudre (11) réglé dans une condition de fonctionnement prédéterminée à un premier passage d'écoulement (15), qui relie le dispositif d'alimentation en poudre (11) à une tête (12), pour décharger la poudre de la tête (12) ;
la détection de la poudre s'écoulant à travers le premier passage d'écoulement (15) en utilisant un premier capteur (13) ;
le calcul d'un premier débit de la poudre s'écoulant vers la tête (12) sur la base d'une sortie du premier capteur (13) ;
la commutation d'un passage d'écoulement (15, 18) à travers lequel la poudre doit être alimentée à partir du dispositif d'alimentation en poudre (11) à partir du premier passage d'écoulement (15) vers un deuxième passage d'écoulement (18), qui relie le dispositif d'alimentation en poudre (11) à un réservoir (17) ;
l'alimentation de la poudre provenant du dispositif d'alimentation en poudre (11) réglé à la condition de fonctionnement prédéterminée vers le réservoir (17) à travers le deuxième passage d'écoulement (18) ;
la détection de la poudre s'écoulant à travers le deuxième passage d'écoulement (18) à l'aide d'un deuxième capteur (19) ;
le calcul d'un deuxième débit de la poudre s'écoulant vers le réservoir (17) sur la base d'une sortie du deuxième capteur (19) ;
le calcul du premier débit à partir de la sortie du premier capteur (13) sur la base d'un premier modèle mathématique qui décrit une relation entre la sortie du premier capteur (13) et le premier débit de la poudre ;
le calculer du deuxième débit à partir de la sortie du deuxième capteur (19) sur la base d'un deuxième modèle mathématique qui décrit une relation entre la sortie du deuxième capteur (19) et le deuxième débit de la poudre, et
la détermination s'il y a une anomalie dans l'appareil de fabrication additive (10) en comparant la sortie du premier capteur (13) quand la poudre est alimentée à partir du dispositif d'alimentation en poudre (11), qui fonctionne dans la condition de fonctionnement prédéterminée, vers le premier passage d'écoulement (15) avec la sortie du deuxième capteur (19) quand la poudre est alimentée à partir du dispositif d'alimentation en poudre (11), qui fonctionne dans les conditions de fonctionnement prédéterminées, vers le deuxième passage d'écoulement (18).

13. Programme de commande (PG) pour un appareil de fabrication additive selon la revendication 1, qui fait exécuter par un processeur (31) le procédé selon la revendication 12.
